# EUROPEAN PATENT SPECIFICATION

(11) **EP 0 567 986 B1**
(45) Date of publication and mention of the grant of the patent: **09.07.1997**
(21) Application number: 93106785.4
(22) Date of filing: 27.04.1993
(51) Int. Cl.: B67D 5/60, F16L 39/04

(54) **A cartridged piping-connecting apparatus, and connecting system using the same**
Vorrichtung zum Verbinden eines Rohres mit einer Rohrleitung und zugehöriges Verbindungssystem
Dispositif de raccordement d'un conduit à une canalisation et système de raccordement utilisant celui-ci

(30) Priority: 28.04.1992 JP 136171/92; 08.12.1992 JP 351802/92; 17.02.1993 JP 49916/93
(43) Date of publication of application: 03.11.1993
(73) Proprietor: TOYO ENGINEERING CORPORATION, Chiyoda-ku, Tokyo 100 (JP)
(72) Inventor: Okuda, Osamu, Urayasu-shi, Chiba-ken (JP); Shima, Kazumi, Sakura-shi, Chiba-ken (JP); Ishibashi, Hiroki, Mobara-shi, Chiba-ken (JP)
(74) Representative: Boeters, Hans Dietrich, Dr.

(56) References cited:
- EP-A- 0 208 640
- EP-A- 0 528 727
- DE-A- 3 831 467
- Patent Abstracts of Japan vol. 14, no. 176 (C-707)(4119) 9 April 1990 & JP-A- 63 172 631 (ASAHI ENG CO LTD)

## Description

### FIELD OF THE INVENTION

The present invention relates to a unitized apparatus wherein a piping element and a connecting device is included and formed into a piping cartridge and a batch-wise production system utilizing the same. More particularly the present invention relates to a system for transferring a final or an intermediate product in batch-wise production using a unitized piping cartridge which is transported and connected automatically between a tank and header pipelines provided for change-over purpose.

### BACKGROUND OF THE INVENTION

There are many plants that include large-sized stationary tanks and lines for changing over a product and wherein the discharging, receiving and washing of a product are carried out by changeover operations. Examples are production plants for foods and beverages. In that case, usually the production scale is large. In such production plants, for example, a raw material or an intermediate product is transferred from a group of tanks to another group of tanks of another production steps situated at another plant location in accordance with the desired purpose. In that case, a header made up of a number of pipelines is provided next to the group of such tanks. This header is provided for the purpose of receiving and discharging, for example, an intermediate product and of washing. To change from the receiving to the discharging, a changeover of the lines is required, and in the practical operation, this changeover operation is carried out by changeover of valves or a change of line connection by hoses.

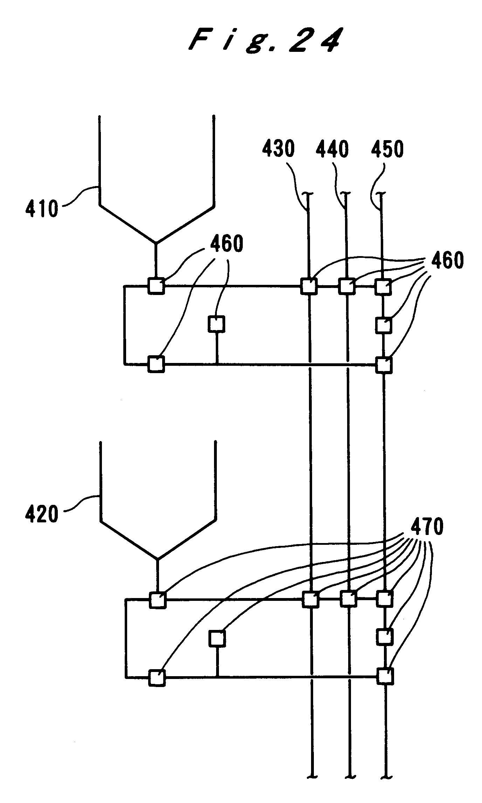

An example of this conventional way of changing-over by valves of line connection is shown in Fig. 24. In the figure, numerals 410 and 420 designate tanks for intermediates, numerals 430, 440, and 450 designate header pipelines, and numerals 460 and 470 designate changeover valves of the systems of the tank 410 and the tank 420. Therefore, for example, if there are three header pipelines for receiving, discharging and washing for the group of tanks in common, many valves, 460 and 470, are required for the changeover of pipelines, as shown in Fig. 24.

When there are many tanks, the number of changeover valves is increased and the pipeline network including the changeover valves becomes more complicated.

In order to improve this complicated state of pipelines of such a batch-wise plant, recently a concept of a so-called pipeless chemical plant has been suggested, and various suggestions have been made to realize it.

For example, Japanese Patent Application (OPI) No. 144745/1987 discloses a container for batch-wise production that is used in such a manner that the container (tank) is mounted on a vehicle and is moved and stopped at a desired station; a suitable connection is made between the required pipeline and the container automatically; and then a product is delivered.

However, in that case, since the tank is to be carried on a vehicle, if the geometric size (typically the diameter) of the tank is large, the inner volume increases by the third power of the diameter; therefore the inner volume becomes enormously large, a considerable load is to be applied to the vehicle when the tank filled completely with a product, and the vehicle itself must be large, thereby resulting in an increase in cost. Further, if the inner volume becomes large, the tank may be likely to tumble, leading to a safety problem. Further if the size of the tank is large, the geometric size of the space where the vehicle travels becomes large and sometimes seriously affects the size of the building of the plant.

Thus, the conventional system of a so-called pipeless plant wherein a tank is transported is attended with many problems if the size of the tank becomes large, and thereby there is a limit.

In the industry of producing beverages, as stated above, there are many cases wherein a tank having a large volume is required. In that case, it is not advantageous and practical to handle diversified products by a conventional system of transporting a tank. To cope up with a conventional changeover of valves, it is unavoidable to require a large number of the changeover valves and this leads to an increase in cost as stated above; and another problem arises: namely, the need for a complicated control system.

Further, in the food industry, in order to prevent an intermediate product remaining in a pipeline from fermenting due to putrefaction, washing is carried out each time of changeover of lines; the valves have a special complicated structure so that mixing of product does not occur and the washing can be done easily; and therefore the valves are expensive. Further, if there are many lines to be changed over, the number of valves is increased and the input and output points for controlling purpose are increased, so that the cost of the facilities increases. It gives a serious problem with respect to costs when the facilities of the factory are renewed or reinforced.

At the time when the facility was not made large-sized and was not automated, tanks and pipelines were connected through hoses that were flexible. In that case, the positioning of the connecting hoses, the alignment, and the operation of a connection-securing mechanism (i.e., clamping etc.) were conducted manually. When the hose is not relatively large in diameter, manual operation is possible, but however when the hose becomes large in diameter, these operation is very laborious.

Even if the connection of the hose is automated, many problems still remain.

To make the connection operation of flexible hoses automated, a system is suggested wherein, for example, a hose mounted on a vehicle is moved to a prescribed position and is automatically connected to a desired pipeline port (Japanese Patent Application (OPI) No. 26328/1991). In this system, flexible hoses are directly mounted on a vehicle and are moved between a tank and a pipeline header, and after the vehicle is stopped at a required position, the couplings attached to both ends of the flexible hoses are connected to desired nozzles through coupling-position-changing means provided on the vehicle side. When the connection is completed, the vehicle leaves, and the flexible hoses are remained positioned, for example, between the tank side and the nozzle on the pipeline side.

This system has the following defects:
(1) The vehicle has its own stopping accuracy depending on the driving system, the control system, and the presence or absence of a track, and every time the vehicle is stopped the position becomes different.
   With a track system, the accuracy of the stopping is good. However, for a vehicle of a trackless system, generally the accuracy of the stopping varies widely from several millimeters to ten plus several millimeters, depending on the speed and the induction system. On the other hand, as respective tanks and pipelines are stationary, the relative positional relation between a tank and a pipeline and the vehicle varies every time the vehicle is stopped. Therefore, its fine adjustment is required.
   To carry out the fine adjustment, a sensor for detecting the relative positional relation and a mechanism for correcting the distance to the object is required. That is, for the connection purpose, a three-dimensional position identification operation is required.
(2) After the connection is done, the operation, for example transporting of liquid, is carried out, but the hose is not always kept in the original connected shape during or after the operation, depending upon the property of liquid. The hose is transformed. Therefore, the high-level identification of the three-dimensional shape is required when the vehicle has arrived again to disconnect the hose, or when the vehicle passes below the hose.
(3) Each of flexible hoses has a minimum curvature radius and, in order to allow the deformation to be absorbed sufficiently, the length of the hose is required to be increased to a certain extent. Further, to make the life of the hose long, it is required to keep to the specification a suitable curvature radius. If the hose is short in length, the life of the hose decreases and, in addition, in an extreme condition, the liquids cannot flow due to the collapse at the hose end.
(4) After the vehicle leaves, only flexible hoses are left connected. With the remaining hoses only, it is difficult to detect the state of the operation. This leads to a centralized operational management; for example judging the liquid level in the tank by the tank-side sensor, transmitting the judgment to a host computer, and giving a direction to vehicle to disconnect and remove the hose. Therefore, the system is not suitable for the autonomous operation that is a basic idea of the suggested pipeless plant.
(5) Although multiple flexible hoses can be mounted on a vehicle and are moved, the shape of the hoses is not always fixed, and usually repeated use of the hoses results in distortion, and therefore actually it is difficult to use multiple hoses. Further, when connection ports on the tank-side and the connection ports on the pipeline side are connected through a combination of hoses, the hoses become entangled, and it requires high-level technique to set the hoses automatically in position, which seems unpractical. This is further liable to occur because the shape of hoses are not always definite after the disconnection.

In short, in the above mentioned suggestion, the flexible hoses are handled with the shape difficult to handle, which requires high-level identification technique and/or control technique and this is a great hindrance to the realization of automation.

To overcome these problems and to increase the flexibility of the operation, it is considered to mount a highly intelligent robot on a vehicle to handle flexible hoses; but this still requires high-level identification processing and a high-level control system to solve the problems, and such a robot must be unavoidably large, because great force is required to drive a coupling device.

As described above, in a production system wherein changeover operations are required, neither conventional valve changeover system nor the conventional system wherein a container (tank) is transported does not give a satisfactory solution to meet diversified products flexibly and the problem cannot be solved with the above hose automatic connecting system.

In a plant where use of a stationary tank is unavoidable, development of a new system without using changeover valves nor hose connection changeover has been demanded wherein the flexibility of the production to meet diversified products is increasingly requested.

EP-A-0 528 727 discloses a cartridged piping-connecting apparatus comprising a piping element that has a function of connecting a stationary pipeline to another stationary pipeline or to a stationary pipeline tank and has coupling means and positioning means for positioning the piping element at a prescribed position. Also driving means are provided or driving the piping element. The piping element and the driving means are housed in a frame to form a unit cartridge which is provided on a transporting means. In this piping-connecting apparatus the length of the pipe to be exchanged is restricted to one that corresponds to a multiple length of the module.

### SUMMARY OF THE INVENTION

An object of the present invention is to provide a cartridged piping-connecting apparatus, for connecting between a stationary tank and a stationary pipeline or between two stationary pipelines, that can be used in a case wherein high-level sanitation is demanded.

Another object of the present invention is to provide a cartridged piping-connecting apparatus that has an extensible slide mechanism and connect between a stationary tank and a stationary pipeline or between two stationary pipelines.

A further object of the present invention is to provide a cartridged piping-connecting apparatus utilizing a flexible hose, which is convenient to use and inexpensive in cost.

A further object of the present invention is to provide a system which comprises transporting and connecting a cartridged piping-connecting apparatus.

A further object of the present invention is to provide a batch-wise production system which uses a system of transporting and connecting a cartridged piping-connecting apparatus.

These and other objects, advantages, features, and uses will become more apparent as the description proceeds, when considered with the accompanying drawings.

### DETAILED DESCRIPTION OF THE INVENTION

In the present invention, either being extensible or piping elements being selected from a group consisting of piping elements having different lengths to conform with specified spaces are housed in a rigid frame and the whole is made into a so-called cartridge as a transporting unit, thereby realizing improvement in the handling performance. The opposite ends of the piping element are provided with connecting apparatuses as coupling means, and the movement of the piping element in the cartridge is conducted by a driving means. Since piping element is formed into a cartridge, positioning of the piping element can be made in a usual manner used in FA (factory automation) technique, and the shape of piping element, which is housed in the frame, remains unchanged at the time of attachment for connection and after the operation. Different types of piping elements can be suitably selected depending on the application.

That is, the above object of the present invention has been attained by providing:

A cartridged piping-connecting apparatus comprising a piping element that has a function of connecting a) a stationary tank and a stationary pipeline or b) a stationary pipeline and another stationary pipeline and has a coupling means provided on both ends thereof, said piping element being extensible for its length or being selected from a group consisting of piping elements having different lengths to conform with specified spaces, having a driving and positioning means for driving and positioning of said piping element at a prescribed position and a frame to house said piping element and said driving and positioning means to form a unit cartridge, said cartridge being provided on a transporting means.

Specific embodiments of the present invention are described in the dependent claims.

### BRIEF DESCRIPTION OF THE DRAWINGS

Fig. 1 is a plan view of the first embodiment using a cartridged piping-connecting apparatus of the invention.

Fig. 2 is a side view of the embodiment shown in Fig 1, using a cartridged piping-connecting apparatus of the invention.

Fig. 3 is a front view illustrating the connection of cartridge 9 at the position of the tank 2 of Fig. 1.

Fig. 4(a), Fig. 4(b), and Fig. 4(c) show the relationship between the connecting joint of the tank and the header and the length of the pipeline, wherein each of Fig. 4(a), Fig. 4(b), and Fig. 4(c) shows connecting a pipeline having a length "1", length "2", and length "3", respectively.

Fig. 5 shows a cross section of a connecting (coupling) joint having an inner valve.

Fig. 6 shows the state before the clamping of the connection is made.

Fig. 7 shows the clamped state.

Fig. 8 is a cross section of a guide cone to be used for positioning the cartridge.

Fig. 9 is an example of control circuit of the system of the invention.

Fig. 10 is a plan view of the second embodiment using a cartridged piping=connecting apparatus of the invention.

Fig. 11 is a side view of the embodiment, shown Fig. 10, of the cartridged piping-connecting apparatus of the invention.

Fig. 12 is a front view illustrating the connection of cartridge 9 at the position of the tank 4 in Fig. 10.

Fig. 13 is a cross section of a lifting apparatus provided with a rotating table.

Fig. 14 is an enlarged section of an example of the connecting apparatus to be used for connecting port below the tank.

Fig. 15 is a cross section of an example of the connecting apparatus at the connected port on the pipeline header-side.

Fig. 16 shows the connected state of electric source using a power source connector.

Fig. 17 shows the connected state of pressured air using an air connector.

Fig. 18 is a control circuit of the system for the piping-connecting apparatus of the invention.

Fig. 19 is a front view illustrating the third embodiment of the invention using a hose cartridge 9 at the position of the tank 4 in Fig. 10.

Fig. 20 is an enlarged section of an example of the connecting apparatus to be used in the embodiment shown in Fig. 19 for connecting port below the tank.

Fig. 21 is a cross section of an example of the connecting apparatus to be used at the connecting port on the pipeline header-side in the embodiment shown in Fig. 19.

Fig. 22 is a side view of an example of the cartridged piping-connecting apparatus of the invention.

Fig. 23 is a plan view of the fourth another embodiment using cartridged Piping-connecting apparatus of the invention, between multiple pipelines and other multiple pipelines.

Fig. 24 is an explanatory view of a conventional way of changing over at pipelines.

Now the present invention will be described based on illustrated Examples.

In the industry of producing foods and beverages, severe conditions of quality control of the products are imposed, and in particular it is important to secure high sanitation. Therefore, for piping elements, the following are required:
(1) When a fermented product is treated, the products stay and remain in an uneven and unsmooth section in a pipeline and undergo fermentation due to putrefaction. The products go into a recess in the pipeline as well as an unexpected space or stagnant section and stay there, resulting in fermentation and putrefaction.
(2) In production of foods and beverages, in order to prevent the above putrefaction stated under (1), washing has to be done frequently. For the washing purpose, a weak-alkaline solution, a weak-acid solution, or fresh water is flowed repeatedly, or sometimes hot water is used, and therefore the environment of the use becomes severe. For the transferring purpose, an internal pressure is applied repeatedly, and then the conditions become more severe. Therefore, as the piping element, a flexible hose having an uneven part is not desirable to be used, and the piping element which is composed of a stainless steel thin-walled pipe having a smooth inner surface is a desirable selection.

The first embodiment of the present invention is as follows:

A cartridged piping-connecting apparatus comprising a piping element that has a function of connecting a stationary tank and a stationary pipeline, wherein said piping element is selected from the group of piping element having different length to conform with the specified space between said stationary tank and said stationary pipeline, and has a coupling means provided on both ends thereof, a driving means for the purpose of supporting and driving said piping element; and a frame to house said piping element and said driving means to form a unit cartridge, said cartridge being provided on a transporting means.

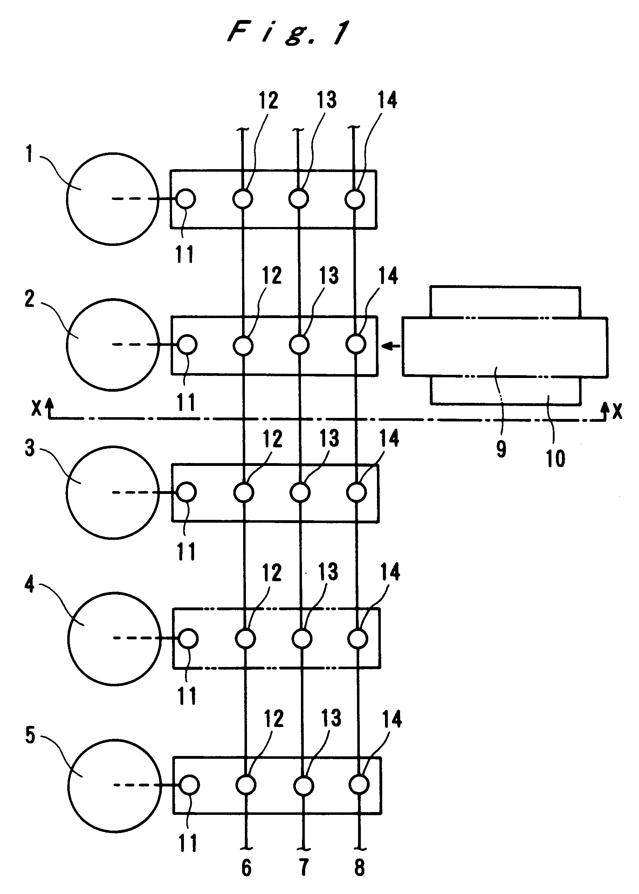

The example of the first embodiment of the present invention is described according to Figs. 1 to 9.

Fig. 1 is a plan view of an example of a production system using the cartridged piping-connecting apparatus of the present invention. In the following drawings, like numerals designate like or corresponding parts.

In the drawings, reference numerals 1, 2, 3, 4, and 5 respectively designate tanks containing different contents (e.g., raw materials and intermediate products), numerals 6, 7, and 8 designate line pipelines, and numeral 9 designates a cartridge mounted on a transporting vehicle (hereinafter referred to as a vehicle) 10. Numeral 11 designates connecting joints provided to the tanks 1 to 5, respectively, and numerals 12, 13, and 14 designate connecting joints provided to the line pipelines 6, 7, and 8, respectively. In this example, although the five tanks are arranged in line and pipeline headers, comprising three pipelines, are arranged in line along the tanks, there is no particular restriction on the number of the tanks and the number of the pipelines.

Fig. 1 shows the case of operation wherein a cartridge having pipeline lengths of "1", "2", and "3" is automatically selected depending on the position of the header that is desired to be joined and is mounted on the vehicle 10, and the vehicle 10 is stopped at the position of the tank 2. When the vehicle 10 is stopped at the position of the tank 2, the cartridge 9 is set in position by a transferring apparatus 61 (e.g., a roller conveyer of a push-pull system) attached to the vehicle.

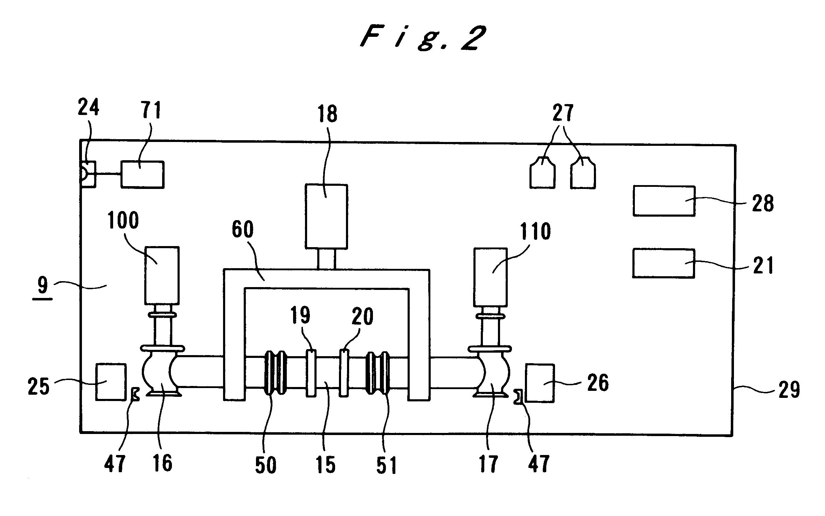

Fig. 2 is a side view of an example of the cartridged piping-connecting apparatus of the present invention. Within the cartridge 9, a piping 15 is provided. The piping 15 is composed of a straight pipe section having a prescribed length that is described later, which section connects joints 16 and 17 provided at the opposite ends; the piping also has displacement absorbing mechanisms 50 and 51 provided in the course of the straight pipe section. The piping 15 may, for example, be a sanitary stainless steel pipe used in the food industry. Since such a pipe has a smooth inner surface, the roughness of the inside can be minimized.

If the interface between the tank and the header is arranged as shown in Fig. 1, suitably three kinds of piping different in length are taken into consideration when the tank-side connecting joint 11 and the header-side connecting joint 12, 13, or 14 are to be connected. If the connecting joints 11 and 12 are connected, the piping 15 is to be such that the length between the connecting joints 16 and 17 provided at the opposite ends is equal to the length connecting the centers of the connecting joints 11 and 12. This is designated as a piping having a length of "1". Similarly, if the connecting joints 11 and 13 are connected, the piping 15 is to be such that the length between the connecting joints 16 and 17 provided at the opposite ends is equal to the length between the centers of the connecting joints 11 and 13. This is designated as a piping having a length of "2". Further, if the connecting joints 11 and 14 are connected, the piping 15 is to be such that the length between the connecting joints 16 and 17 provided at the opposite ends is equal to the length between the centers of the connecting joints 11 and 14. This is designated as a piping having a length of "3". Thus, it is recommended to prepare three kinds of cartridged piping-connecting apparatuses having lengths of "1", "2", and "3" in this example. If the distances between the connecting joints 11, 12, 13, and 14 are equal, it is apparent that, for example, the length of the piping having a length of "3" is three times the length of the pipeline having a length of "1".

In Fig. 2, the opposite ends of the piping 15 have the cartridge-side connecting joints 16 and 17, and they are connected to or disconnected from the tank-side connecting joint 11 and the header-side connecting joints 12, 13, and 14 after the whole of the piping is vertically driven by a driving apparatus 18.

In Fig. 2, in the course of the piping 15, the displacement-absorbing mechanisms 50 and 51 are provided for absorbing, for example, misalignment or inclination at the time when the opposite connecting joints are connected to the tank-side connecting joint and the header-side connecting joints, and, for example, use is made of resin bellows.

The piping 15 is connected to the driving apparatus 18 through a supporting means 60 and is moved only vertically by this driving apparatus. The driving apparatus 18 is fixed to a frame. The driving apparatus can be suitably selected depending on the type of energy source to be supplied to the cartridge; and it is, for example, a motor or an air cylinder. An energy source 28 for the driving apparatus can be built in the cartridge 9. If electric energy is used for the drive, a battery may be built in; or if air energy is used for the drive, instead of the battery, a small compressed air container can be built in.

In the frame in cartridge, an opening (or openings) is suitably provided so as to allow the piping element to go down or to allow the piping element to connect the stationary tank and the stationary header pipeline through the frame.

In the cartridge 9, in addition to the connecting joints 16 and 17 and the driving apparatus 18, for example, there may be mounted other apparatuses 25 and 26 having auxiliary functions (e.g., clamping mechanisms for the mechanical locking, and apparatuses for washing the coupling surfaces after the disconnection); a control unit 21, serving as a CPU that acts as a "brain" of the cartridge; an information-processing unit 71; a communication unit 24, for communicating with a host control system; a detecting apparatus, for monitoring the state of the operation (e.g., an electric conductivity meter 19 and a flowmeter 20); an auxiliary tank 27 (e.g., a tank for a washing liquid for a washing apparatus and a tank for recovering waste liquid); and driving energy source units 28 (e.g., air containers and batteries), all of which are fixed in a frame 29 that is a rigid strength member. Due to the frame 29, the cartridge 9 is made rigid and can be handled as a material handling unit by a usual material handling means.

In the cartridge 9, different sensors for monitoring the condition of the operation can be placed, in particular in the piping 15. For example, in the course of the piping the electric conductivity meter 19 is provided, which can sense the electric conductivity of a fluid that comes newly in place of former fluid.

Further, the flowmeter 20 may be situated in the course of the piping, to detect the flow rate to know the total passing flow velume integrally. These measurements can be made by a non-contact system, and, for example, if an electromagnetic flowmeter is used, even a product can be flowed whose washing is troublesome.

The measured values can be communicated to a host system via communication unit 24 during the connection or when a cartridge has returned to the home station. Further, when the capacity of the energy source lowers, communication can be taken to a service station by communication means. As the communication means, various ways are widely used. A non-contact way, such as optical communication, may be employed.

In order to attain the so-called "autonomous mobile body" that is a basic idea of a pipeless plant, the cartridge to be moved is allowed to have intelligence in the same way the tank is allowed to have intelligence. For that purpose, the control unit (CPU 21) to serve as a "brain" is provided in the cartridge. Specifically, for example, a sequencer for allowing automatic operation may be provided. Of course it can be omitted for such a simple system in which a CPU is not required.

Further, an auxiliary functional unit, such as an alcohol-spraying apparatus and a washing liquid spraying apparatus for washing O-rings at connected sections, can also be mounted. Of course, a tank having a small volume for the above solution is built in. Depending on the desired purpose, for example, an apparatus having a sterilizing function (e.g., an ultraviolet sterilization apparatus and a flame sterilization apparatus) can also be mounted.

Thus, since it is a cartridge, required apparatuses and the like can be arbitrarily mounted, and of course the mounted facilities can be changed to meet the demands of various industries or products as required.

In the case both of the driving energy sources and the information-processing unit (CPU) are built in the cartridge, all of the operation can be carried out on the side of the cartridge and autonomous operation by the cartridge itself can be realized. Since autonomous operation by the cartridge itself can be carried out, the autonomy of the operation can be further heightened. Thus, although the function corresponding to the feet of a human depends on the vehicle, the cartridge comes to have a "brain" (CPU) and "muscles" (the driving mechanisms and the energy sources). In this way, since the autonomy is heightened by arranging the piping, the driving apparatuses for moving and connecting them, the energy sources, the CPU serving as a brain; the communication means, etc., into the one frame, the handling by usual material handling means becomes easy and therefore various effects are produced.

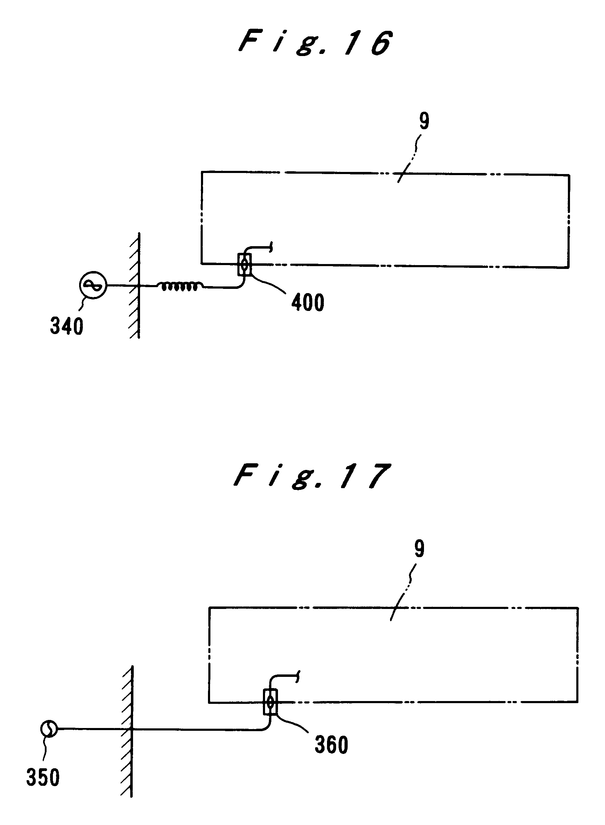

If it is not advisable to have energy sources in the cartridge, it is also possible to connect automatically an energy line (e.g., an air line or an electric line) provided on the fixed side at the time when the cartridge is set in position. For example, advisably an air line or an electric line is provided in the position where the setting of the cartridge will be made, and when the cartridge is set, the automatic-connecting apparatus provided in the cartridge, will make the cartridge be connected to the line. In this case, however, it is required to provide an air line or an electric line to each tank (which will be described later; Figs. 16 and 17).

Since the CPU and the information-processing and communication means are mounted in the cartridge, the completion of the connection can be sensed by a sensing apparatus or the like and its signal can be communicated to the host computer, and after the transferring of the product is confirmed to finish by the detection signal coming from the flowmeter provided in the course of the piping or from the liquid level indicator provided in the tank, the correcting apparatus is to be released to disconnect based on the judgment of the CPU mounted in the cartridge. Of course, at the time of the disconnection operation, information is to be exchanged with the tank-side. After the completion of all the work, a signal is sent to the vehicle through optical communication means and, for example, the arrival of the vehicle is awaited.

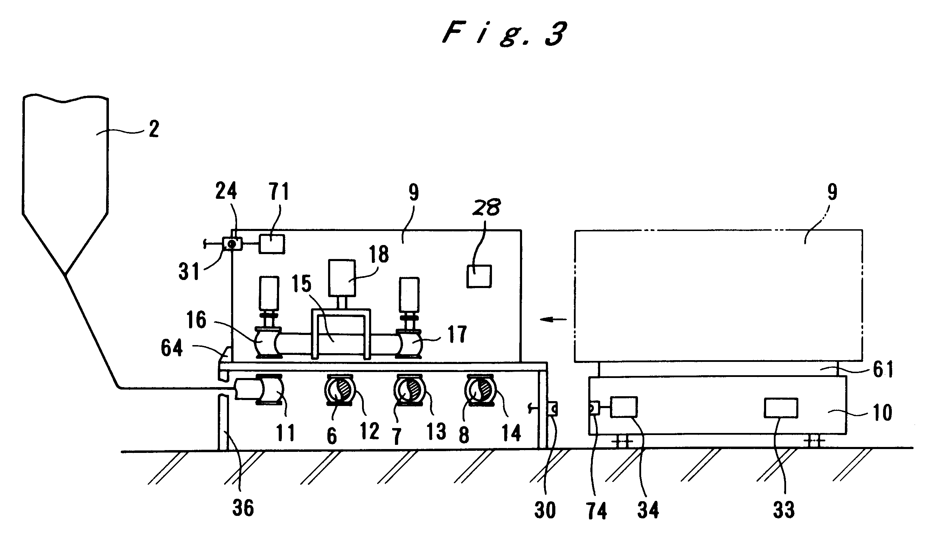

Fig. 3 is a front view illustrating the connection of the cartridge 9 at the position of the tank 2 of Fig. 1 (a section taken along line X-X).

The cartridge 9 is transferred from the vehicle 10 of Fig. 3 by the transferring apparatus 61 and is positioned in place without mechanically interfering with the connecting joints 11, 12, 13, and 14. The cartridge is set on a station 36 having a frame 64 provided over the joints 11, 12, 13, and 14.

After the cartridge is set, the vehicle 10 may be moved to another position where another cartridge is mounted thereon and may transfer the cartridge to another tank. To position the cartridge, a conventional method, wherein a guide cone or a guide pin is used, can be employed. With this guide cone, the relative positioning between the cartridge and the station frame can be decided definitely. When the welding work is of the connecting joints of the tank side and the header side carried out, based on the guide cone of the station frame by using a suitable jig, the positional relationship can be within a quite precise range and a prescribed positional relationship can be secured.

Referring to Fig. 3, the piping 15 having a length of "2" for connecting the tank-side connecting joint 11 and the header-side connecting joint 13 is built in the cartridge 9. The driving apparatus 18 in the cartridge is operated to connect the connecting joint 11 of the tank 2 to the connecting joint 13 on the pipeline header (the line 7 in Fig. 3). The piping 15, including the opposite connecting joint apparatuses 16 and 17, is lowered automatically by the driving apparatus 18 (e.g., an air cylinder) to carry out the required connection. The piping 15 is lowered by the driving apparatus 18 to connect the connecting joints 16 and 17 to the lower connecting joints 11 and 13. At that time, divided-type clamp 47 is moved inward by clamp-driving apparatuses 46a and 46b, to clamp the united sections. Although a conventional clamping operation is carried out manually, in this case the clamping operation is automatically carried out by using the driving apparatuses 46a and 46b contained in the in-cartridge auxiliary apparatuses 25 and 26.

Fig. 3 shows a case wherein, as driving energy, electrical power from a battery built in the cartridge is used. Numerals 30 and 31 designate fixed-side communication units for the cartridge. Numeral 33 designates a CPU of the vehicle, and 34 designates an information-processing unit of the vehicle.

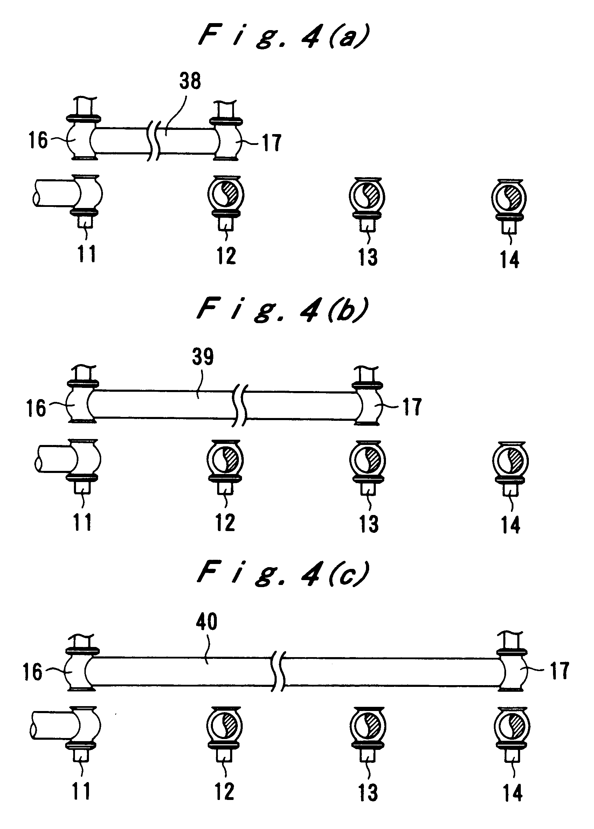

Fig. 4(a), Fig. 4(b), and Fig. 4(c) show the relationship between the connecting joint of the tank side the header side and the cartridge side and also the length of the piping. If the tank-side connecting joint 11 and the header-side connecting joint 12 are connected, the cartridge 9, having a piping 38 with the length connecting the centers of the connecting joint 11 and the connecting joint 12 (length "1"), as shown in Fig. 4(a), is to be prepared. If the connecting joint 13 is connected, similarly, a piping 39, having the length connecting the centers of the connecting joint 11 and the connecting joint 13 (length "2"), is to be prepared; and if the connecting joint 14 is connected, a piping 40, having the length connecting the centers of the connecting joint 11 and the connecting joint 14 (length "3"), is to be prepared, as shown in Fig. 4(b) and Fig. 4(c), respectively. Thus, three types of the cartridges 9 are prepared in accordance with the length of the piping 38, 39, 40, and a selection is made as required for the connection. If the distances between the tank-side connecting joint 11 and the header-side connecting joint 12 and the header-side connecting joint 12 and the connecting joints 13 and 14 are made equal, and the distance between the connecting joint 11 and the connecting joint 12 is assumed to be a unit length, the distances between the connecting joint 11 and other connecting joints will be a length that is the unit length times an integer.

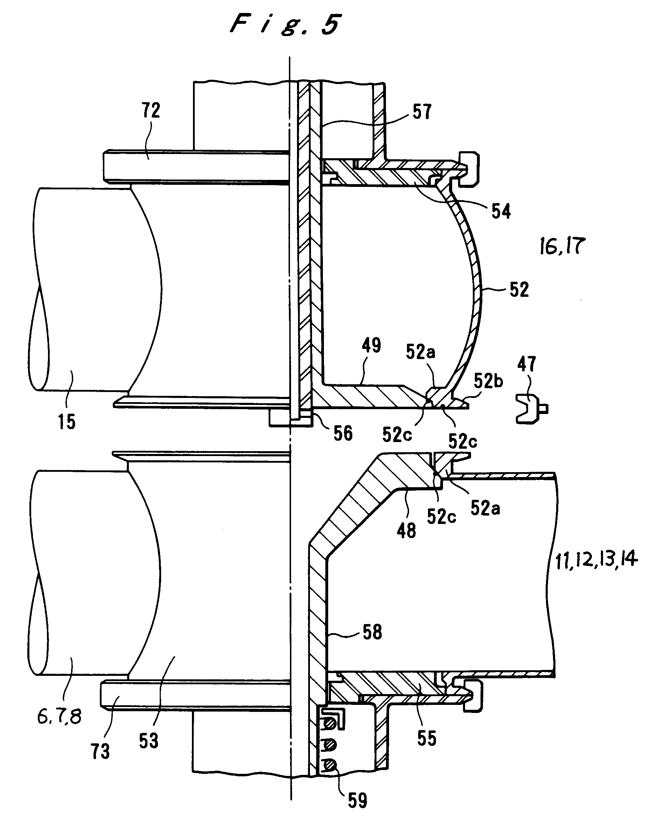

Although various types of connecting joints can be employed as a coupling means, Fig. 5 shows a cross section of a connecting joint having an inner valve. The cartridge-side connecting joints 16 and 17 are made up of an inner valve 49; a connecting joint body 52; an end washing-chamber 56, provided in the shaft of the inner valve and having a double structure; an inner valve shaft 57, passing through a body top plate 54; and inner valve-driving actuators 100 and 110, provided at the forward end of the shaft. Numerals 15 and 6,7,8 designate piping and pipelines, respectively.

At the lower part of the body 52 are provided a valve seat 52a for the inner valve 49; a ferrule end 52b, which will be clamped by a divided type clamp 47 for mechanical locking; and plural O-rings 52c for sealing purpose.

The header-side connecting joints 11, 12, 13, and 14 are made up of an inner valve 48; a body 53; a valve shaft 58, passing through a body bottom plate 55; and an automatically returning spring unit 59, provided at the forward end of the valve shaft. This pair of connecting joint is to be obtained by modifying a sanitary valve used conventionally in the food industry to form valve blocks. That is, a conventional double-seat valve is cut horizontally in the middle part, and the upper part is used for the connecting joints 16 and 17 in the cartridge 9, while the lower part is used for the tank-side connecting joint 11 and the header-side connecting joints 12, 13, and 14. Of course, an O-ring 52c is provided on the face of a ferrule end for sealing purpose. (In Fig 5, this O-ring is provided on the side of connecting joints 16 and 17.) Clamps 72 and 73 are for connecting the top plate and the bottom plate to the body.

Since the inner valves of the tank-side connecting joint 11 and the header-side connecting joints 12, 13, and 14 are automatically returned and closed by springs, it is not required for these sides to provide specifically an energy supply line for opening and closing operations (e.g., an air line in the case of an air-type opening and closing valve), which is favorable in view of cost and work. Favorably the inward surface of the inner valve 48 in the lower connecting joint is made flush approximately with the inner surface of the pipeline 6, 7, 8 to minimize the part where stagnation will possibly occur at the time of washing. After the completion of the connection of the connecting joints, sometimes mechanical locking is required, and for that purpose, preferably, clamping is to be made by the half clamp 47, which is easy to handle. To drive automatically the half clamp 47, the clamping apparatuses 46a and 46b are provided in the auxiliary apparatus.

Thus, by providing the inner valve to the connecting joint, leakage of liquid can be prevented at the time of disconnection. And opening and closing can be carried out by only one actuator. Further, higher sanitation can be secured with a sanitary valve.

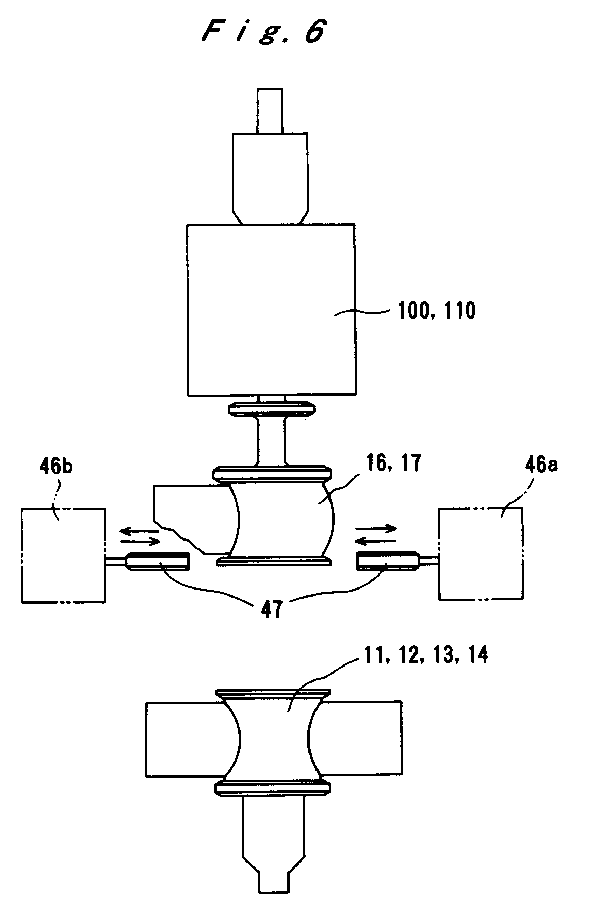

Fig. 6 shows the state before the clamping of the connection is made.

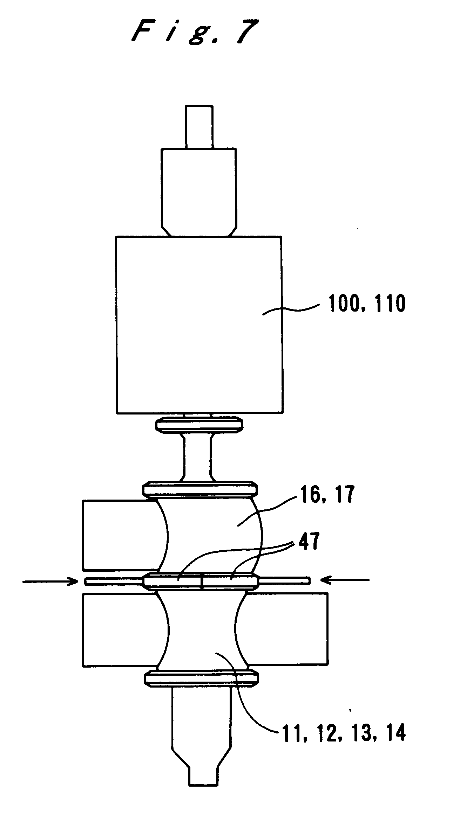

Fig. 7 is an illustration of the clamped state.

Then, the actuators 100 and 110, attached to the forward end of the inner valve shaft through the body top plate of the connecting joints 16 and 17, are operated, to push down the inner valve 49, and this is brought in contact with the lower inner valve 48, to push it down to open it, thereby allowing the flow.

As an energy source for driving the driving apparatus 18 for vertically moving the piping, electric or air energy can be used, and they may be provided in the cartridge or may be supplied after connection is completed between the connecting apparatus of the fixed supply side provided to each tank and the connecting apparatus provided on the cartridge side.

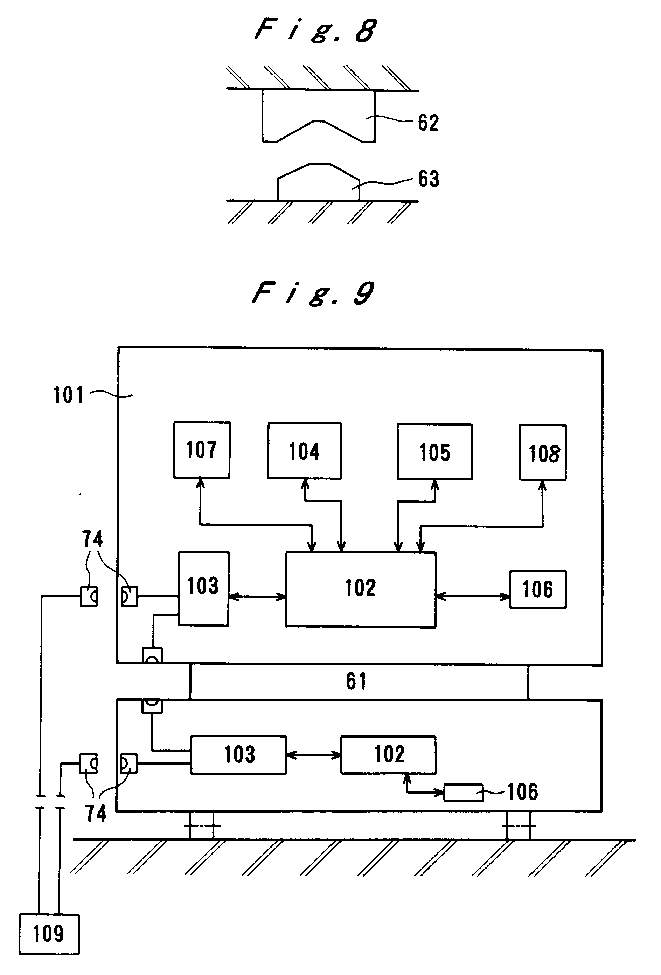

In the above, a guide cone, a guide pin, etc., are used for positioning the cartridge, and an example of the guide cone is shown in Fig. 8. As shown in Fig. 8, by mating the male-side cone 63 and the female-side recess 62, the relative positional relationship is adjusted.

In the above constitution, the vehicle may have a track system or a trackless system. For the case of a trackless system, as the induction and guidance system, an arbitrary one can be selected in accordance with the purpose.

Specifically, the operation of the vehicle 10 and the cartridge 9 is controlled, for example, based on commands received from a host computer at the home station. The cartridge 9 has a detecting apparatus inside it for detecting the state of the movement and the state of the connection, and when the transferring state and the connected state have become prescribed states, the cartridge 9 is operated autonomously. Concerning the control method for controlling the unmanned transporting vehicle 10 and the cartridge 9, and also the transmission and reception of signals, various methods can be used, such as those widely used in the field of FA (factory automation). As a typical method of transmission and reception of signals, for example, an optical communication system can be used. As another method, for example, a number of conventional connectors having several pin terminals can be used, but it requires fine alignment and makes automatic-connecting operation complicate. Therefore, a non-contact system, such as an information transmission system by optical communication, is preferable. In this case, the home station is provided with an optical communication unit, and the vehicle 10 and the cartridge 9 are also provided with optical communication units.

When the vehicle 10 and the cartridge 9 are returned to the home station, by a signal from the host computer, a command about the position of the next connection to be carried out and the type of the piping (length) are received through the built-in communication unit.

Further, although the operation for opening and closing the valve is required when the contents are transferred, the completion of the connection of the in-cartridge connecting apparatus is detected by the detecting apparatus (e.g., a sensor) as described above; its signal is transmitted to the host computer through the optical communication unit; and after confirming that all the conditions are satisfied, the operation of opening the main valve of the tank can be carried out. On releasing the connecting apparatus, the transfer can be confirmed by the host computer through a detected signal of the liquid level in the tank or the detected signal of the flow volume, and then a signal for calling the vehicle 10 is sent from the host computer to carry out the removal of the cartridge 9. After receiving that signal, the CPU of the vehicle 10 controls the vehicle 10 to move to the position, whereby the disconnection operation shall be carried out.

Now the operation of the connecting joint of this invention will be described according to the first embodiment. The cartridge 9 is positioned to meet with the guide cone 64 (or the guide pin) provided on the fixed side. Therefore, for example, the relative positional relationship with the connecting joint 11 under the tank is automatically determined. This is also applied to the relationship with the connecting joints 12, 13, and 14 of the lines 6, 7, and 8 (see Fig. 3).

In this way, the connecting joints 16 and 17 in the cartridge 9 and the connecting joint sides 11, 12, 13, and 14 are opposed to each other. Then, the cartridge-side connecting joints 16 and 17 are lowered by the driving apparatus 18, and the connecting joints are forced to carry out the connection. The mechanical securing or locking is carried out by the clamp mechanism. If a little misalignment occurs at that time, the displacement-absorbing mechanisms 50 and 51 (e.g., resin bellows) are used to absorb it for the connection.

Next, the actuators provided with the joints 16 and 17 are operated, to force the inner valves to form lines, so that the contents in the tank are transferred into the header pipeline through the piping of the cartridge. When the transfer of the contents in the tank is completed, the detection is made by the flowmeter with the cartridge; its completion detection signal is issued to the CPU in the cartridge; and the actuators provided with the joints 16 and 17 are operated, based on the detection signal, to close the inner valves.

Then, the mechanical lock is released and the piping is returned to its original position by the driving apparatus.

In this way, the cartridge that has completed its transfer work is separated from the station; it is mounted on the vehicle; and it is moved to a washing station (not shown). After the required washing of the inside of the piping and also connecting joints is carried out, it is sent to the home station (or the washing station), where it will be ready for next action.

An example of a control circuit of this invention will be described with reference to Fig. 9. This example is a case wherein each cartridge may be provided with a battery, so that external energy is not supplied.

A cartridged piping-connecting apparatus 101 is provided with microcomputers 102 for controlling the whole; apparatus information communication units 103, for controlling the transmission and reception of the information to and from the host computer 109; and or the vehicle, etc.; a connection clamping apparatus 105; piping-driving apparatuses 104, for driving and vertically controlling the piping; inner valve driving apparatuses 107; and a measuring apparatus 108. The connection-clamping apparatus 105 has a mechanism for mechanically securing the ferrule ends of said connecting joints by the clamp, and when the piping-driving apparatus 104 is given a command from the microcomputer 102, the piping-driving apparatus 104 vertically moves the piping to a prescribed position. When the piping is driven by the piping-driving apparatus 104 to a prescribed position and is connected and then the mechanical locking thereof by the connection clamping apparatus is completed, the signal of connection completion is reported to the microcomputer 102. The inner valve-driving apparatus 107 drives the actuators provided to the upper sections of the connecting joints 16 and 17.

The measuring apparatus 108 is made up, for example, of a flowmeter attached to the piping in the cartridge, and it measures the transferred amount of the tank contents and the results of the measurement are given to the microcomputer 102.

The battery 106 gives an alarm signal to the microcomputer 102 when the capacity of the battery has lowered.

The operation of the information system used in this production system will now be described.

First, the vehicle is moved to the home station where the cartridge is ready for action; it communicates with the host computer; and a washed cartridge having a desired prescribed piping length required for the next work is selected. At that time, information is transmitted to the vehicle, through information communication means from the host computer, as to which tank the cartridge is to be carried to. Such a transporting command signal is sent through a communication unit 74, the information processing unit 103, and the microcomputer 102.

When the cartridge 101 is moved to a prescribed tank and is set thereto, the work is carried out based on the information stored previously in the home station (that is, a command to allow vertical movement for connection upon the reception of the set completion signal).

The piping-driving apparatus 104 moves the piping through a motor or the like. The traveling amount is confirmed along with the traveling and is fed back to the motor side, up to complete the final positioning. When the movement is completed and the piping is placed in position, the piping-driving apparatus 104 gives a signal of movement-completion to the microcomputer 102. For this, for example, a limit switch is used.

Then, the driving apparatus in the connection-clamping apparatus is operated, to carry out clamping operation for mechanical locking. The signal for confirming the final completion of the clamping is issued and transmitted to the microcomputer. Then, a signal is sent to the actuator for driving the inner valve of the connecting joint 16, 17.

When the content in the tank is transferred, the transferred amount is measured by a measuring apparatus 108 (e.g., a flowmeter) attached to the piping in the cartridge, so that it can be monitored. When the transferred amount has reached a prescribed amount, a signal can be issued from the cartridge to the tank-side to stop the flow of the transferred contents and then the main valve of the tank will be closed. When all the amount of the contents is discharged, the information about the amount may be transmitted.

Then, a transfer-completion signal is transmitted, and a vehicle that is ready for action is called to execute the removal and transporting of the cartridge to another place.

Although, for example, the battery 106 as an energy source is built in the cartridge 101, before the capacity thereof comes down to the low limit, an alarm is desirably issued. For that purpose, the battery capacity may be monitored (for example by measuring a decrease in the voltage) and an alarm signal is issued outside when the value has reached to a prescribed value.

The second embodiment of the present invention will be described below.

The first embodiment is related to a cartridged piping automatic-connecting apparatus in a field wherein sanitary conditions must be maintained. In the second embodiment, although sanitary conditions are of course secured, the level is lower than that of the first embodiment. Second embodiment is directed to a cartridged unit that can be applied to several connection joints using one piping element unit, since a piping element is including an extensible slide mechanism to allow the longitudinal movement of the piping.

That is, the second embodiment is as follows;

A cartridged piping-connecting apparatus comprising a piping element that has an extensible slide mechanism on one or both ends thereof, a driving means for stretching said extensible slide, and a coupling means provided on both ends thereof for connecting between a stationary tank and a stationary pipeline; a driving means for the purpose of supporting and driving said piping element, and a frame to house said piping element and said driving means to form a unit cartridge, said cartridge being provided on a transporting means.

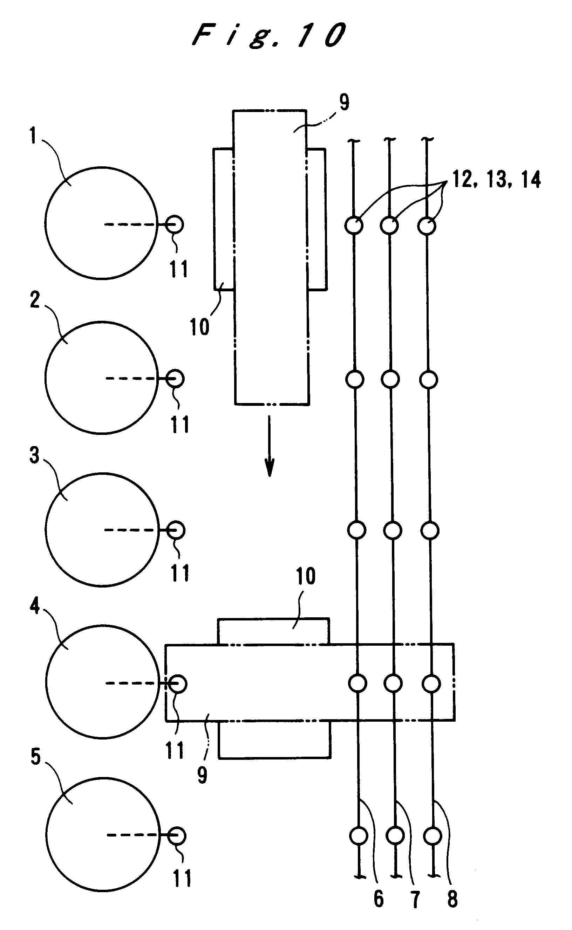

The example of the second embodiment of the present invention is described according to Figs. 10 to 18.

Fig. 10 is a plan view of an example of the embodiment of a production system that uses the cartridged piping-connecting apparatus of the present invention.

This is different from the case of Fig. 1, and can be applied to the case that the distance between the tank and the line pipeline is relatively large and they are separated.

In the figure, numerals 1, 2, 3, 4, and 5 respectively designate tanks containing different contents (e.g., raw materials and intermediate products), numerals 6, 7, and 8 designate line pipelines, and numeral 9 designates a cartridge mounted on a transporting vehicle 10 (hereinafter referred to as a vehicle). Numeral 11 designates connecting joints respectively provided to the tanks 1 to 5, and 12, 13, and 14 designate connecting joints provided to the line pipelines 6, 7, and 8, respectively. In this example, although the five tanks are arranged in line and pipeline headers, comprising three pipelines, are arranged in line along the tanks, there is no particular restriction on the number of the tanks and the number of the pipelines.

In Fig. 10, the vehicle 10 is in the position of the tank 1 originally, and then the vehicle 10 is moved to a prescribed position, e.g., to the position of the tank 4 and is positioned thereto, the vehicle 10 is controlled to stop. When the vehicle 10 is stopped in the position of the tank 4, the cartridge 9 is elevated and rotated by a rotating table and a lifting apparatus attached to the vehicle, and when the cartridge is set in position, the cartridge will perform an operation for connecting the connecting joint 11 of the tank 4 and the connecting joint 12 of the pipeline header.

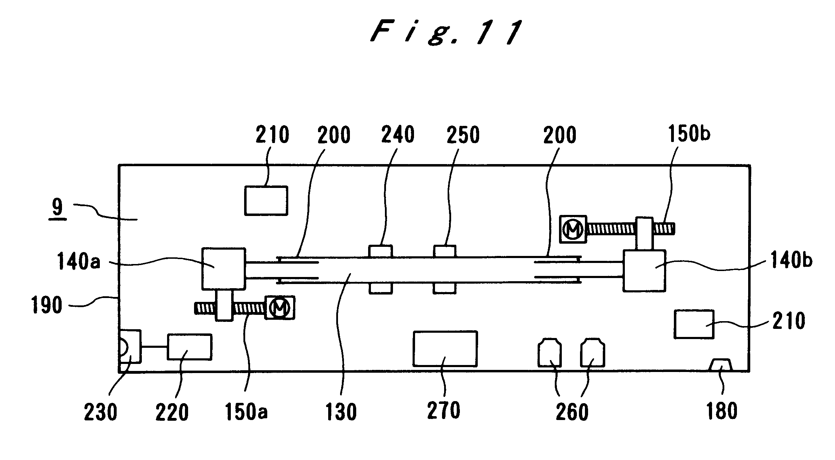

Fig. 11 is a side view of the example of the cartridged piping-connecting apparatus of the second embodiment.

In the cartridge 9, a piping 130 having a sleeve structure is provided, which piping is extendible horizontally (or vertically). The piping 130 may be, for example, a stainless steel pipe used in the food industry. Since the inner surface of piping 130 for this case is smooth, the roughness can be minimized.

If the interface of the tank-side and the header-side is arranged as shown in Fig. 10, it is enough to consider the horizontal and vertical extension or contraction. On one or both ends of the piping is provided a slide mechanism 200, having a horizontally extendible or contractible sleeve structure, whose ends are provided with coupling apparatuses 140a and 140b, which have vertically extendible and contractible slide mechanisms. In each of the coupling apparatuses 140a and 140b, the vertically extendible and contractible slide mechanism, a coupling, and a driving apparatus for driving connecting the coupling are integrated altogether.

For example, in the case of the piping having an interface as shown in Fig. 10, when the cartridge 9 is set in position by a positioning cone 180, the right extendible slide mechanism 200 is drived by a driving and positioning apparatus 150b (a combined mechanism of a ball screw and a motor in the illustrated example) in the cartridge and moved to the desired position and then is finely adjusted.

At that time, precise positioning in relation to the interface of the connecting joints becomes possible.

Similarly, the left side is drived and moved to the desired position of the connecting joints of the tank-side and is finely adjusted and positioned. Then, the couplings are moved vertically automatically by the driving apparatuses mounted in the opposite coupling apparatuses 140a and 140b, and the required connection is made. In this case, the extension can be absorbed by the vertically extendible slide mechanism.

The stroke of the driving apparatus in the coupling apparatus can be set arbitrarily.

With respect to the sealing construction of the slide mechanism 200, various known techniques can be selected according to the application. With respect to the washing of this portion, when the cartridge is once used, since it is disassembled and washed at a washing station, it is continually kept clean.

In the cartridge 9, in addition to positioning mechanisms 150a and 150b and the coupling apparatuses 140a and 140b at the opposite ends of the piping, for example, there are other apparatuses 210, having auxiliary functions (e.g., apparatuses for washing the coupling surfaces after the disconnection); a control unit 220, serving as a CPU that acts as a "brain" of the cartridge; a communication unit 230, for communicating with a host control system; a detecting apparatus, for monitoring the state of the operation (e.g., an electric conductivity meter 240 and a flowmeter 250); an auxiliary tank 260 (e.g., a tank for a washing liquid for a washing apparatus and a tank for recovering waste liquid); and driving energy source units 270 (e.g., batteries), all of which are fixed in a frame 190 that is a rigid strength member.

An energy source for the driving apparatus can be built in the cartridge 9.

Since an energy source is built in, automatic operation can be carried out by the cartridge itself. Further, if the capacity of the energy source lowers, such information can be communicated to a service station through the communication means.

In the cartridge 9, different sensors for monitoring the condition of the operation can be placed. For example, in the course of the piping the conductivity meter 240 is provided, which can sense the conductivity of a fluid that comes newly in place of former fluid.

Further, the flowmeter 250 may be situated in the course of the piping, to detect the flow rate to learn the total passing flow volume integrally.

These measurements can be made by a non-contact system.

The information of the measured values can be communicated to a host system through the communication means 230.

As the communication means, various ways are widely used. A non-contact way, such as optical communication, is considered.

In this way, since this embodiment also has a frame to house a cartridge, required apparatuses and the like can be arbitrarily mounted, and of course the mounted facilities can be changed to meet the demands of various fields of the industry or the products as required.

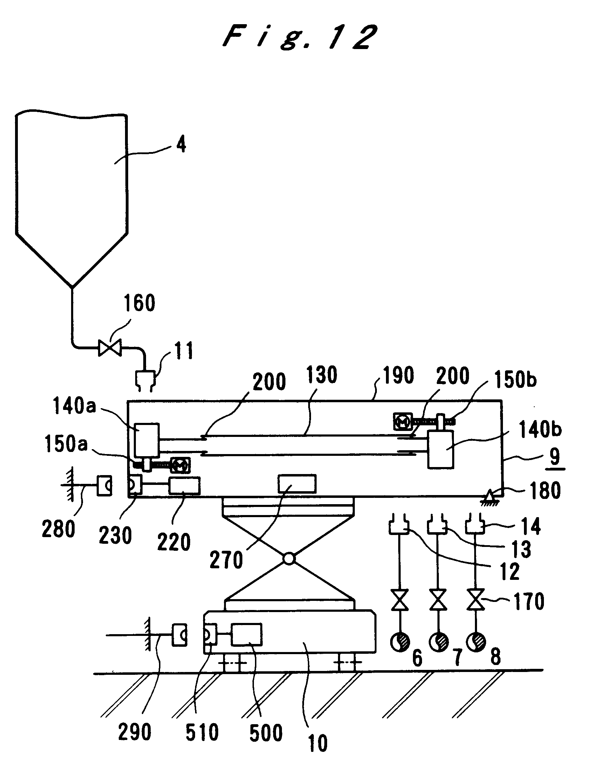

Fig. 12 is a front view illustrating the connection of the cartridge 9 at the position of the tank 4 of Fig. 10. In the figure, an extendible piping 130, having a sleeve and coupling apparatuses 140a and 140b at the opposite ends, is contained in the cartridge 9. Numerals 150a and 150b designate positioning mechanisms for moving the coupling apparatuses to prescribed positions. The extension or contraction is in the vertical direction and the horizontal direction. Fig. 12 is a case wherein electricity is used as a driving energy. Numerals 280 and 290 designate fixed-side communication units for the cartridge or the vehicle. Numeral 500 designates a CPU of the vehicle. Numeral 510 designates a communication unit on the vehicle side.

On the other hand, in the tank 4, the forward end of the transferring line is provided, through an on-off main valve 160, with a connecting joint 11 that corresponds to the coupling apparatus 140a. On the pipeline header-side, a connecting joint 13 of a pipeline header to be connected to the coupling apparatus 140b is provided, which is connected to a pipeline 7 through the on-off valve 170.

As described above, a cartridge 9 is mounted on a vehicle 10. The vehicle may be of a track type or a trackless type, and in the case of a trackless type, various types of induction and guidance system can be selected for it depending on the purpose.

Although the connecting joint 11 is directed downward in Fig. 12, it may be directed sideways. Although the connecting joint 13 is opened upward, it may be arranged higher than others. The connection ports on the header-side are arranged in line. Generally, preferably the connecting joints 11 and 13 are of a male type and the corresponding coupling apparatuses 140a and 140b are of a female type.

The cartridge 9 is elevated into the space between the connecting joints 11 and 13; it is rotated; and it is placed in position without interfering mechanically with the connecting joints 11 and 13.

After fixing and connecting, since the vehicle 10 can move to another position and can mount on another cartridge to be moved, preferably the space below the cartridge has such a size that the vehicle on which another cartridge is mounted can pass through the space.

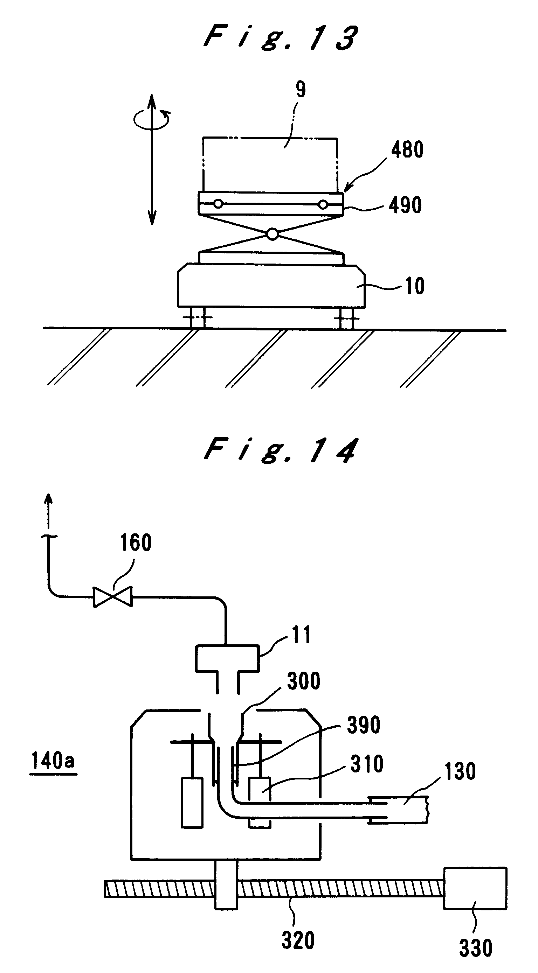

The vehicle 10 is provided with a lifting apparatus or a rotating table, which is shown in Fig. 13. In the figure, numeral 490 designates the lifting apparatus and numeral 480 designates the rotating table provided on the lifting apparatus, and the cartridge 9 will be mounted on the rotating table. As shown by an arrow, the combination of the lifting apparatus and the rotating table allows the height of the cartridge and the direction of the rotation to be set freely. If there is an enough space for the movement of the cartridge, of course, it is not required to rotate the cartridge and simple lifting is sufficient.

As described above, the connecting apparatus 140a and the connecting apparatus 140b are connected and can be extended or contracted horizontally and vertically, and at the time of connection the movement of the connecting port can be absorbed.

Although the coupling apparatuses 140a and 140b are generally driven by a motor, of course, they can be driven by an air motor when the use of electricity involves a safety problem.

Fig. 14 is an enlarged section of an example of the connecting apparatus 140a used for the connecting port below the tank. To the tank is connected a joint 11 through an on-off main valve 160. Although the joint 11 has no inner valve, it may have an inner valve. Generally, this side may be the male side. A joint 300 on the coupling-apparatus side positioned to correspond thereto is of a female type, so that mechanical locking can be conducted. If driving energy used in the connection disappears (in a case, for example, where the vehicle leaves from the cartridge after the cartridge is fixed), the mechanical force at the connecting joint comes to disappear. And therefore, when fluid pressure is applied, disconnection takes place. To prevent that, a mechanical securing mechanism (locking mechanism) is provided for avoiding disconnection in the case of exhaustion of the driving energy. For that purpose, although various types of mechanisms can be used, a typical example is a locking mechanism using a ball or a lever, or a locking mechanism using a mechanical clamp, such as a claw. By using such a mechanical lock, after the necessary connection is completed it is possible for the vehicle to leave from the cartridge. This allows the number of vehicles in the whole plant to reduce and the vehicles can be used effectively. Numeral 390 designates a slide mechanism for adjusting extensively the length of the connecting joint 300.

A linear driving apparatus 310 is required for moving this connecting joint and locking to a male-side joint. In the figure, an electric motor is combined with a rotation to linear conversion mechanism, but when air pressure energy is available, an air cylinder is possible.

A connecting apparatus in which a female-side connecting joint and a linear driving apparatus are built in, is combined with a positioning mechanism, typically a combination of a screw 320 and a motor 330, and can be positioned to a prescribed position. Another method not using a screw and a motor can also be used. For example, if air pressure energy is used, an air cylinder of a middle-position-adjusting type may be used.

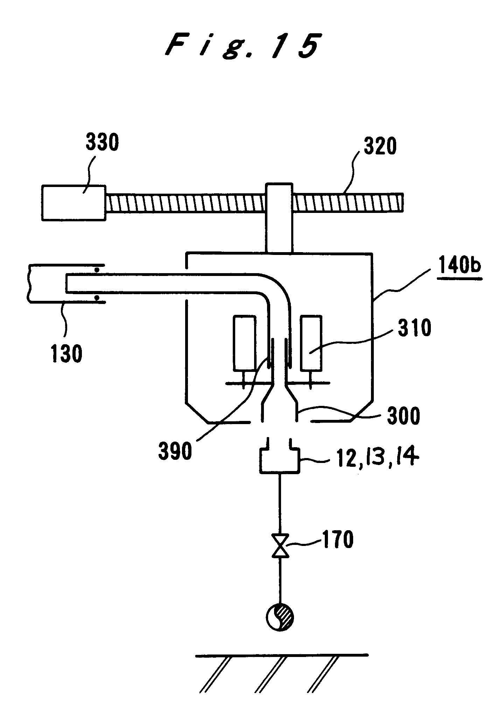

A similar constitution can be formed at the connecting port on the pipeline header-side, which is shown in Fig. 15. On this side, since there are several connecting ports, the constitution is the same as that in Fig. 14, except that use is made of a positioning mechanism that allows positioning at the middle position, and the same reference numerals denotes the same parts. Numeral 170 designates an on-off valve to the header pipeline.

Various types of connecting joints are known that can be used in the above connecting apparatus, and any type of joints may be selected. From the functional point of view, there are connecting joints with or without an inner valve, and selection will be made according to the desired purpose.

For example, by providing an inner valve, leakage of a liquid at the time of disconnection can be prevented. However, if an inner valve is provided, there may be problems that the number of mechanical parts increases; that the internal resistance increases, thereby increasing the fluid pressure loss; and that the washing becomes troublesome. For example, there is a case wherein a ring-like rubber bag at one end, as shown in Japanese Patent Application (OPI) No. 133789/1991, is provided, and when air pressure is applied, the ring-like rubber bag is inflated to seal the connected section, thereby forming a flowing path. In that case, even if the connecting joints are misaligned, such displacement can be easily absorbed by the rubber, so that sealing is realized advantageously, but since there is no inner valve, for example, it is required to provide a pan to somehow catch drops of the liquid at the time of disconnection.

Although the above is an example wherein electric energy is supplied from the battery in the cartridge, if it is not convenient (in view, for example, of the life of the battery), it is also possible that an electric-source-connecting apparatus 340 is separately attached to the position of the tank, and when the cartridge 9 is fixed, the electric source is simultaneously connected. This is shown in Fig. 16. Numeral 400 designates a power source connector-connecting apparatus.

Further, as an energy source, not only electricity but also air pressure energy can be used. In some environments, an electric energy is unpreferable from the point of view of safety, and in that case, air pressure is desirable. For example, as shown in Fig. 17, an air-connecting port 350 is provided separately at the position of the tank, and when the cartridge 9 is fixed the air pressure sourse is automatically connected through the air-connecting apparatus 360.

In the above constitution, the vehicle may be of a track system or a trackless system. In the case of trackless system, as the induction and guide system, an arbitrary one can be selected in accordance with the purpose. Specifically, the operation of the vehicle 10 and the cartridge 9 is controlled, for example, based on commands from a host computer of a fixed-side unit (not shown). The signal is transmitted to the host computer through an optical communication unit, and when all the conditions are satisfied and confirmed, the valve may be opened. On disconnecting the connecting apparatus, at first the transferring of the contents confirmed by the detection signal of the liquid level in the tank or the detection signal of the flow volume, a signal for the request of transporting is sent from the host computer to remove the cartridge, and the microcomputer of the vehicle 10 controls the vehicle to move to a prescribed position, so that the disconnection operation may be carried out. In the case wherein a flow-rate-detecting apparatus is built in the cartridge, by the detection signal, the disconnection is made by itself.

Now the operation of the coupling apparatus of this embodiment in Fig. 12 will be described. In conformity with the guide cone 180 (or a guide pin) provided on the stationary side, the cartridge 9 is positioned. Therefore, the relative positional relationship with the connecting joint 11 below the tank is determined by itself. This is also applied to the case of the connecting joints 12, 13, and 14 of the lines 6, 7, and 8.

Therefore, recommendably when the cartridge 9 is positioned and fixed, the amount of traveling corresponding to the positional relationship is given to the coupling apparatuses 140a and 140b. For that case, the coupling apparatuses 140a and 140b must be returned to the home position before the movement, and then the amount of traveling is given by a signal from the host computer. The operation returning to the home posiiton is carried out before the cartridge is disconnected, and when a travelling-amount-detecting apparatus or a function (e.g., a proximity sensor) for monitoring the position relative to the side to be connected, is built in the cartridge 9, the positioning can be carried out easily by a usual positioning technique (by a feedback mechanism).

Thus, the connecting joint male sides 11, 12, 13 and 14 and the connecting joints female sides 300 and 300 built in the coupling apparatus 140a or 140b, are placed oppositely to each other by the positioning mechanism.

Then, the connecting joint 300 is elevated (the coupling apparatus 140a) or lowered (the coupling apparatus 140b) by the linear driving apparatus, and the connecting section is made.

At that time, even if there is a little misalignment, it will be absorbed and coupling can be made by the ring-like rubber bag. Other various types of couplings can be suitably selected; for example, such as a quick operation coupling wherein precise alignment is made by using a guide pin.

After the connection is completed, a mechanical lock is applied so that disconnection will not happen to occur even if the forcing energy is exhausted.

Then, the tank contents are transferred by opening the on-off valves 160 and 170 through the piping of the cartridge to the header pipeline.

When the transfer of the tank contents is completed, the completion of the transfer is detected based on the liquid level in the tank or the flow rate; then the detection signal is issued from the detecting apparatus to the host computer in order to close the on-off valves 160 and 170 and then the cartridge is removed by the signal from the host computer.

The removal of the coupling is made first by releasing the mechanical lock, and then the linear driving apparatus is returned to its original position.

Then, the positioning mechanism is controlled to return to the home position. Since, on the side of the coupling apparatus 140b, several coupling positions are possible, it is requested for the coupling apparatus to return to the home position.

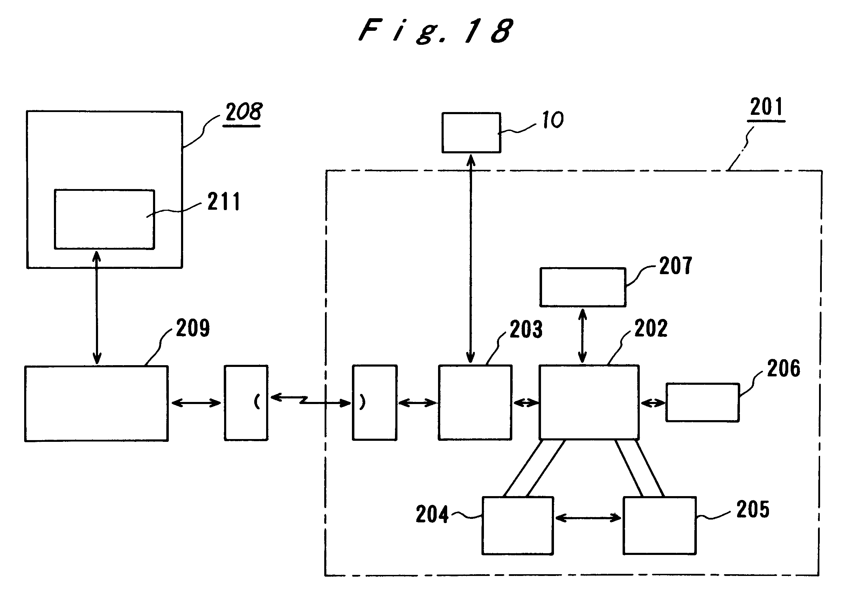

Other examples of the control circuit of the above present system will now be described with reference to Fig. 18.

A cartridged piping-connecting apparatus 201 is provided with a microcomputer 202, for controlling the whole apparatus; an information communication means 203, for controlling the transmission or receiving of information to or from the host computer 209; the vehicle, etc.; a traveling driving apparatus 204, for controlling the traveling of an automatic-connecting apparatus 205; and a measuring apparatus 207. The automatic-connecting apparatus 205 has integrally a piping having vertically extendible slide mechanisms at opposite ends, a coupling of the piping, and a driving mechanism for moving the coupling to a prescribed position and for connecting the piping; and upon receiving a command for traveling from the microcomputer 202, the traveling-driving apparatus 204 lets the automatic-connecting apparatus 205 to a prescribed position. The automatic-connecting apparatus 205 is traveled to a prescribed position by controlling a traveling-driving apparatus 204, and upon the completion of the traveling, that information is sent to the traveling-driving apparatus 204, whereby the traveling-driving apparatus 204 informs the microcomputer 202 of the traveling completion signal. When the automatic-connecting apparatus receives a connection command from the microcomputer 202, it carries out the connection operation, and upon the completion of the connection, it informs the microcomputer 202 of the connection-completion signal.

The measuring apparatus 207 is made up, for example, of a flowmeter attached to the piping in the cartridge; 207 measures the transferred amount of the tank contents and gives the measured results to the microcomputer 202.

On the other hand, a tank 208 is provided with a tank-side information communication means 211 and the tank 208 carries out the transmission or receiving of information to and from the host computer 209 through the tank-side information communication means 211.

The vehicle 10 goes to a cartridge home station, where a washed cartridge is ready for action and selected. At that time, the vehicle is taught to which station the vehicle should go from the host computer through the information communication means of the cartridged piping-connecting apparatus.

When the cartridge goes to a prescribed tank and is set, a signal is transmitted from the host computer through the tank-side information communication means 211, or a command by information previously stored in a home station (i.e., such a command to allow right or left movement upon the reception of the set completion signal) is given, indicating which pipeline port of the header-side pipeline is to be connected.

When that traveling command is sent through the information communication means 203 and the microcomputer 202, the traveling-driving apparatus 204 allows the automatic-connecting apparatus 205 by a motor or the like. In the course of the traveling, the traveling-driving apparatus 204 confirms the amount of the traveling, which is fed back to the motor side, to carry out the final positioning. When the tranveling is completed and it is moved to the prescribed position, the traveling-driving apparatus 204 issues a traveling-completion signal to the microcomputer 202. For that, for example, a limit switch is used.

Then, a driving apparatus in the automatic-connecting apparatus is operated for the connection. In that case, the connection is effected by the same procedure as that of the driving apparatus. A signal confirming the completion of the final connection is issued and transmitted to the microcomputer. That signal is transmitted through the information communication means to the host computer to open or close the main valve of the tank.

Then the tank contents are transferred and the transferred amount is measured by a measuring apparatus (e.g., a flowmeter) attached to the piping in the cartridge, so that the transferred amount can be monitored. When it has reached a prescribed transferred amount, a signal to close the main valve can be issued from the cartridge so as to stop the transfer. When the whole amount is discharged, information about the amount may be transmitted.

As an energy source, for example, a battery 206 is built in the cartridge, and before the capacity thereof lowers, an alarm is desirably issued. For that purpose, the capacity can be monitored (for example by measuring a decrease in the voltage) and an alarm signal is issued outside when the value has reached to a prescribed value.

The third embodiment of the present invention will be described below.

As described above, the second embodiment is directed to a cartridged piping automatic-connecting apparatus using an extensible pipe. Although piping elements having smooth surface as specified for the sanitary field are used in the first and second embodiments, the third embodiment is an example wherein a flexible hose is used, as generally used piping element. It is adequate if the hose has such a length that the maximum length extending between the tank and the line pipeline and also the displacement absorption anticipated at the time of connection are taken into consideration. When the hose is used, the cartridge is not requested to have a displacement-absorbing apparatus. Such a flexible hose is convenient to use and inexpensive in cost, and is suitable for the case wherein considerations to remaining liquid in the piping and washing thereof are not needed.

That is, the third embodiment of the present invention is as follows:

A cartridged piping-connecting apparatus comprising a hose element that has a function of connecting a stationary tank and a stationary pipeline, wherein said hose element comprises a flexible hose and has a connecting apparatus provided on both ends thereof, driving means for traveling; and a frame to house said hose element said cartridge being provided on a traveling means.

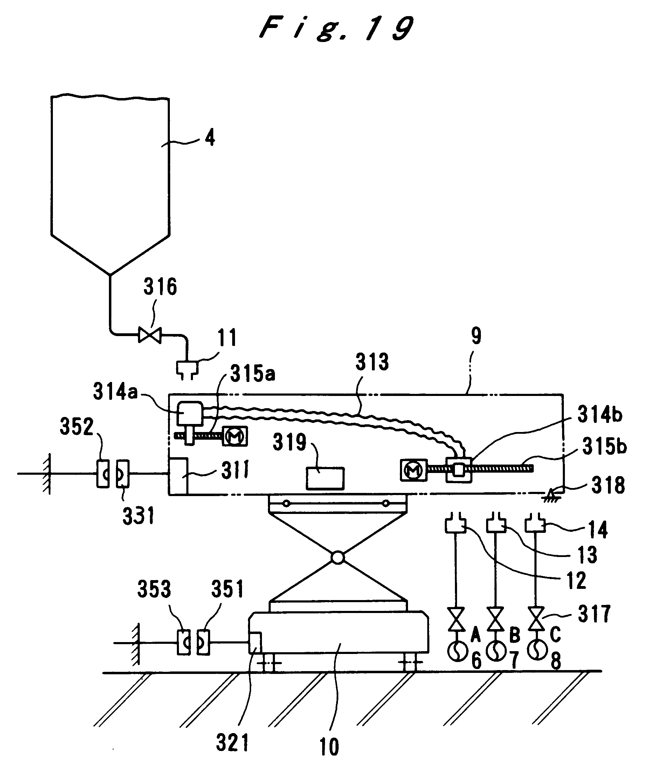

An example of the third embodiment will be described below, in accordance with Fig. 19 to 22.

Fig. 19 is a front view illustrating the connection of a hose cartridge 9 at the position of a tank 4 of Fig 10. In the figures, a hose 313, having automatic-connecting apparatuses 314a and 314b at the opposite ends, is built in the hose cartridge 9. Numeral 315a and 315b designate positioning mechanisms for moving the automatic-connecting apparatuses to prescribed positions, respectively.

On the other hand, the tank 4 is provided with a connecting joint 11 at the forward end of the take-out line through an on-off main valve 316, that correspons to the automatic-connecting apparatus 314a. On the pipeline header side connecting joints 12, 13, and 14 of pipeline headers that will be connected to the automatic-connecting apparatus 314b are provided, which are connected to on-off valves 317. Numeral 318 designates a guide cone for fixing the hose cartridge in place.

As described above, the hose cartridge 9 is mounted on a vehicle 10. Numeral 319 designates a battery built in the cartridge; 311 designates a CPU in the cartridge; and 321 designates a CPU on the vehicle side. The battery 319 supplies electric energy needed for the positioning and connecting operation by the automatic-connecting apparatus in said hose cartridge 9.

Numeral 331 designates a built-in communication unit on the cartridge side; 351 designates a communication unit on the vehicle side; and 352 and 353 designate correspondingly respective communication units.

In Fig. 19, the connecting joint 11 is directed downward, but it may be directed sideways. Although the connecting joints 12, 13, and 14 are opened upward, their levels may be different and they may be directed sideways. The connection ports on the header-side are arranged in line. Generally, preferably the connecting joints 11, 12, 13 and 14 are of a male type and the corresponding coupling apparatuses 314a and 314b are of a female type.

The cartridge 9 is elevated into the space between the connecting joints 11, 12, 13, and 14; it is rotated; and it is placed in position without interfering mechanically with the connecting joints 11, 12, 13, and 14.

After fixing and connecting, since the vehicle 10 can move to another position and can be mounted on another cartridge to be moved, preferably the space below the cartridge has such a size that the vehicle on which another cartridge is mounted can pass through the space.

The vehicle 10 is provided with a lifting apparatus or a rotating table, which is shown in Fig. 13. In the figure, 490 designates the lifting apparatus and 480 designates the rotating table provided on the lifting apparatus, and the cartridge 9 will be mounted on the rotating table. As shown by an arrow, the combination of the lifting apparatus and the rotating table allows the height of the cartridge and the direction of the rotation to be set freely. If there is enough space for the movement of the cartridge, of course, it is not required to rotate the cartridge and simple lifting is sufficient.

As described above, the connecting apparatus 314a and the connecting apparatus 314b are connected through a hose that can absorb the movement of the connecting port at the time of the connection. Since the length of the hose can be estimated, the length is not required to be more than required. Further, a restraining jig may be provided, when needed, so that stagnation of a liquid or trapping of air due to the bend porting of the hose will not occur.

Although the automatic-connecting apparatuses 314a and 314b are generally driven by a motor, of course, they can be driven by an air motor when the use of electricity involves a safety problem. In that case, instead of the battery for driving the motor, a pressured air container may be built in.

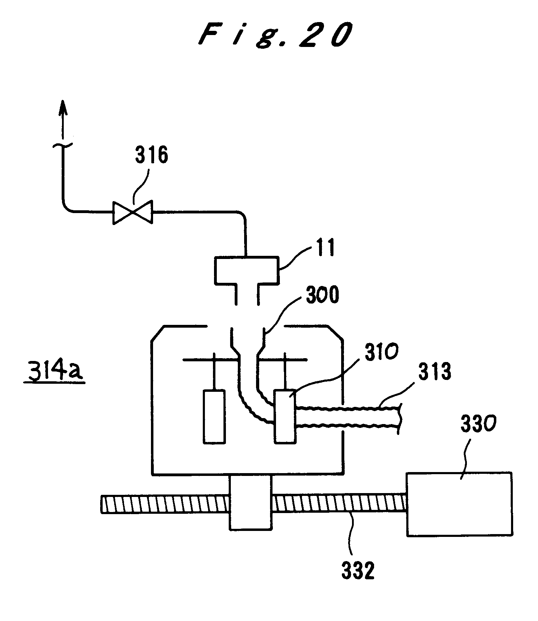

Fig. 20 is an enlarged section of an example of the connecting apparatus 314a used for the connecting port at the lower part of the tank. To the tank is connected a joint 11 through an on-off main valve 316. Although the joint 11 has no inner valve, it may have an inner valve. Generally, this side may be the male side. A joint 300 on the automatic-connecting apparatus side positioned to correspond thereto is of a female type, so that mechanical locking can be conducted. If driving energy used in the connection disappears (in a case, for example, where the vehicle leaves from the cartridge after the cartridge is fixed), the mechanical force at the connecting joint comes to disappear. And therefore, when fluid pressure is applied, disconnection takes place. To prevent that, a mechanical securing mechanism (locking mechanism) is provided for avoiding disconnection in the case of exhaustion of the driving energy.

For that purpose, although various types of mechanisms may be used, a typical example is a locking mechanism using a ball or a lever, or a locking mechanism using a mechanical clamp, such as a claw. By using such a mechanical lock, after the necessary connection is coupled, it is possible for the vehicle to leave from the cartridge. This allows the number of vehicles in the whole plant to reduce and the vehicles can be used effectively.

A linear driving apparatus 310 is required for moving this connecting joint and locking to a male side joint. In the figure, an electric motor is combined with a rotation-linear conversion mechanism, but in the case wherein air pressure energy is used, an air cylinder is possible.

A connecting apparatus in which a female-side connecting joint and a linear driving apparatus are built in, is combined with a positioning mechanism, typically a combination of a screw 320 and a motor 330, and can be posiitoned to a prescribed position. Another method not using a screw and a motor can also be used. For example, if air pressure energy is used, an air cylinder of a position-adjusting type can be used.

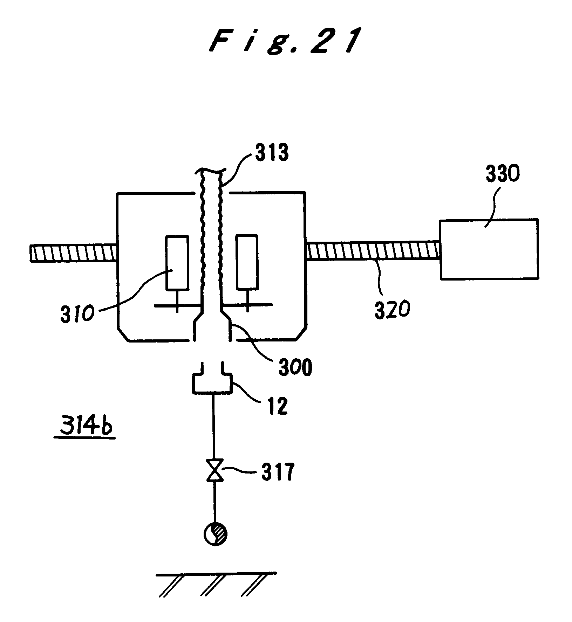

A similar constitution can be formed at the connecting port on the pipeline header-side, which is shown in Fig. 21. On this side, since there are several connecting ports, the constitution is the same as that in the figure, except that use is made of a positioning mechanism that allows positioning at the middle position, and like reference numerals in Fig. 19 denotes like parts. Numeral 317 designates an on-off valve to the header pipeline.

Various types of connecting joints are known that can be used in the above connecting apparatus, and any type of joints may be selected. From the functional point of view, there are connecting joints with or without an inner valve, and selection will be made according to the desired purpose.

For example, by providing an inner valve, leakage of a liquid at the time of disconnection can be prevented. However, if an inner valve is provided, there may be problems that the number of mechanical parts increases; that the internal resistance increases, thereby increasing the fluid pressure loss; and that the washing becomes troublesome. For example, there is a case wherein a ring-like rubber bag at one end, as shown in Japanese Patent Application (OPI) No. 133789/1991, is provided, and when air pressure is applied, the ring-like rubber bag is inflated to seal the connected section, thereby forming a flowing path. In that case, even if the connecting joints are misaligned, such displacement can be easily absorbed by the rubber, so that sealing is realized advantageously, but since there is no inner valve, for example, it is required to provide a pan to catch somehow drops of the liquid at the time of disconnection.

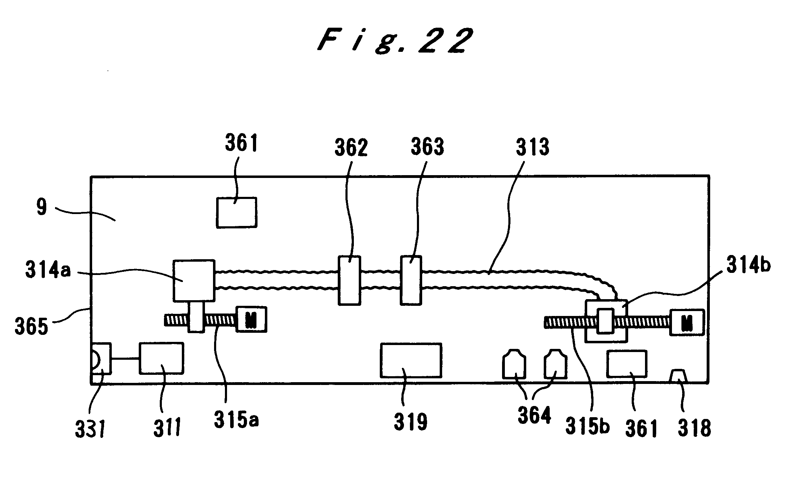

An example of cartridge used in the third embodiment will now be described with reference to Fig. 22.

In the cartridge 9, in addition to the positioning mechanisms 315a and 315b and the connecting apparatuses 314a and 314b at the opposite ends of the hose, for example, there are other apparatus 361, having auxiliary functions (e.g., apparatuses for washing the coupling surfaces after the disconnection); a control unit 311, serving as a CPU that acts as a "brain" of the cartridge; a communication unit 331, for communicating with a host control system; a detecting apparatus, for monitoring the state of the operation (e.g., an electric conductivity meter 362 and a flowmeter 363); an auxiliary tank 364 (e.g., a tank for a washing liquid for a washing apparatus and a tank for recovering waste liquid); and driving energy source units 319 (e.g., batteries), all of which are fixed in a frame 365 that is a rigid strength member. In Fig. 22, the same reference numerals used in Fig. 19 are used to indicates the same parts.

The frame 365, has the same function as described for the first and second embodiments.

An energy source for the driving apparatus is built in the cartridge 9. If electric energy is used for the driving, possibly a battery unit 319 as the driving energy source is built in; and if air energy is used, for example, there is a method wherein a pressured air container is built in.

Since an energy source is built in, autonomous operation by the cartridge itself can be carried out. Other constituent elements, and action and control of the system are the same as the second embodiment.

The fourth embodiment is described below.

While the first to the third embodiments are related to a cartridged piping automatic-connecting apparatus for connecting ports provided on the tank side and the header pipeline side, this embodiment is a special variation wherein, instead of several tanks, several pipelines are connected to the header side pipelines through connecting ports. And this embodiment can be applied to a system that needs the changeover of lines.

That is, the fourth embodiment of the present invention is as follows:

A cartridged piping-connecting apparatus comprising a piping element that has a function of connecting ports provided on the stationary pipeline and another stationary header pipeline, wherein said piping element is selected from the group of piping elements having different length to conform with the specified space between said stationary pipeline and said another stationary header pipeline, and has a coupling means provided on both ends thereof, a driving means for driving said piping element; and a frame to house said piping element and said driving means to form a unit cartridge, said cartridge being provided on a transporting means.

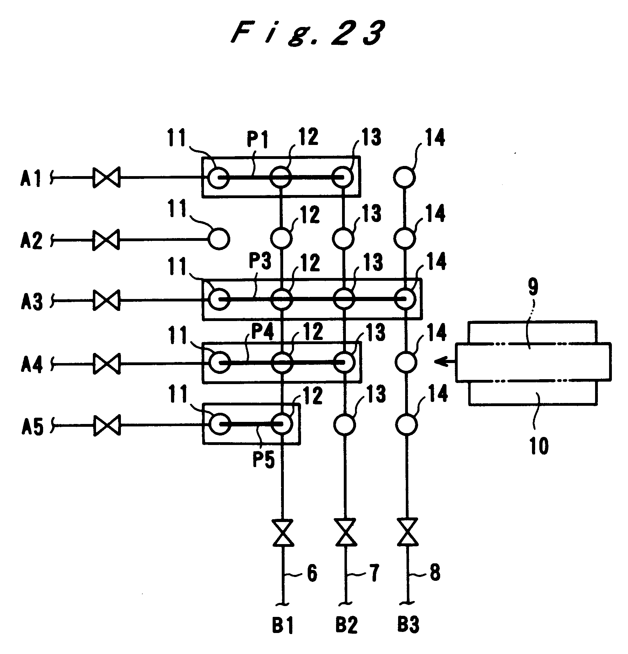

The example of the fourth embodiment of the present invention is described according to Fig 23.

Fig. 23 shows an example of an embodiment of a system for the changeover of lines wherein use is made of the present cartridged piping-connecting apparatus.

Instead of tanks, pipelines A1 to A5 are provided and connecting ports 11 are provided at their ends. The header pipeline side is the same as that of the first to the third embodiment. The connecting pipes P1 to P5 are the same as those piping used in the cartridged piping-connecting apparatus.

A pipeline B1 will be connected to the pipeline A5 through the connecting pipe P5; a pipeline B2 will be connected to the pipelines A1 and A4 through the connecting pipes P1 and P4; and a pipeline B3 will be connected to the pipeline A3 through the connection pipe P3. As a result the changeover of the lines can be carried out.

The structure of the cartridge, the structure and connection of the coupling, other parts, and the operation are the same as those of the first embodiment. Of course, as the connecting pipes, either extendible pipe or flexible hose may be used as same as the case of the second and the third embodiments.
1. A changing of the type of a product can be easily handled for the case of stationary tanks; a batch-wise production system can be operated in a flexible manner; and the material to be transferred can be changed easily.
2. Since automatic-connecting systems to which including piping elements, connecting apparatuses provided at opposite ends, energy source, and driving mechanism, are formed into a cartridge, the automatic handling becomes easy; and since a CPU is built in the cartridge, autonomous operation becomes possible resulting in a flexible plant operation.
3. Since the piping element used in the cartridge can be suitably selected according to the field in which it will be used, the quality control becomes preferable. The types of the piping element include (1) a case wherein a flexible hose is used, (2) a case wherein a piping having a slide mechanism, such as an extendible pipe, is used, and (3) a case wherein a piping having a fixed length is used.
4. Since the connecting ports are separated in a physical sense, mixing of products will never occur, and positive quality control is secured.
6. All works and controls can be automatically made.

## Claims

1. A cartridged piping-connecting apparatus comprising a piping element (130), that has a function of connecting a) a stationary tank (1 to 5) and a stationary pipeline (6 to 8) or b) a stationary pipeline (6 to 8) and another stationary pipeline (6 to 8) and has a coupling means (140) provided on both ends thereof, said piping element (130) being extensible for its length, having a driving and positioning means (150) for driving and positioning of said piping element (130) at a prescribed position and a frame (190) to house said piping element (130) and said driving and positioning means (150) to form a unit cartridge (9), said cartridge (9) being provided on a transporting means (10).

2. An apparatus as claimed in claim 1, wherein said extensible piping element (130) is a flexible hose (313).

3. An apparatus as claimed in claim 1, wherein said extensible piping element (130) is a piping element having an extensible slide mechanism (200) on one or both ends thereof and the driving means (150) drives the extensible slide mechanism (200).

4. A cartridged piping-connecting apparatus comprising a piping element (15) that has a function of connecting a) a stationary tank (1 to 5) and a stationary pipeline (6 to 8) or b) a stationary pipeline (6 to 8) and another stationary pipeline (6 to 8) and has a coupling means (16, 17) provided on both ends thereof and is selected from a group consisting of piping elements (38 to 40) having different lengths to conform with specified spaces, having a driving means (18) for driving said piping element (15) and a frame (29) to house said piping element (15) and said driving means (18) to form a unit cartridge (9), said cartridge (9) being provided on a transporting means (10).

5. The apparatus as claimed in one of claims 1 to 4, wherein said coupling means (16, 17, 140) comprises a connecting means on both ends of the piping element (15, 130) to connect between said stationary tank (1 to 5) and said stationary pipeline (6 to 8), the positioning means (18, 150) positioning said piping element (15, 130) at a prescribed position.

6. The apparatus as claimed in claim 1, wherein said transporting means (10) is an automatic guided vehicle (AGV).

7. The apparatus as claimed in one of claims 1 to 6, wherein said piping element (15, 130) has a function of connecting a stationary pipeline (5 to 8) and another pipeline (5 to 8).

8. The apparatus as claimed in one of claims 1 to 7, wherein an energy supplying means (28, 106) for supplying driving energies for use at the side of said cartridge (9) is built in the cartridge frame (29, 190).

9. The apparatus as claimed in one of claims 1 to 7, wherein an energy supplying means for supplying driving energies for use at the side of said cartridge (9) is provided at the stationary tank side or the stationary pipeline side.

10. The apparatus as claimed in one of claims 1 to 9, wherein a detector (19, 20) for detecting the state of content in the pipe (15, 130) is provided on the piping element.

11. The apparatus as claimed in claim 10, wherein said detector is a flowmeter (20).

12. The apparatus as claimed in claim 10, wherein said detector is an electric conductivity meter (19).

13. The apparatus as claimed in one of claims 1 to 12, wherein a means for controlling the system (21, 220) is provided in the cartridge frame (29, 190).

14. The apparatus as claimed in one of claims 1 to 13, wherein an information communication means (71, 230) is provided in the cartridge frame (29, 190).

15. A system utilizing the cartridged piping-connecting apparatus as claimed in one of claims 1 to 14, which comprises the transporting of said apparatus (9) to a prescribed position between a) a stationary tank (1 to 5) and a stationary pipeline (6 to 8) or b) a stationary pipeline (6 to 8) and another stationary pipeline (6 to 8), and connecting said apparatus (9) between a) said stationary tank (1 to 5) and said stationary pipeline (6 to 8) or b) said stationary pipeline (6 to 8) and said another stationary pipeline (6 to 8) by the a coupling means (16, 17, 140).

16. A system of batch-wise production which comprises utilizing a system as claimed in claim 15.

## Patentansprüche

1. Kassettenartige Leitungsverbindungsvorrichtung, die ein Leitungselement (130) enthält, das die Funktion des Verbindens a) eines stationären Tanks (1 bis 5) und einer stationären Verbindungsleitung (6 bis 8) oder b) einer stationären Verbindungsleitung (6 bis 8) und einer anderen stationären Verbindungsleitung (6 bis 8) hat und eine an seinen beiden Enden vorgesehene Kopplungseinrichtung (140) aufweist, wobei das Leitungselement(130) bezüglich seiner Länge verlängerbar ist, eine Antriebs- und Positioniereinrichtung (150) zum Antreiben und Positionieren des Verbindungsleitungselements (130) an einer vorgegebenen Position und einen Rahmen (190) aufweist, zum Aufnehmen des Leitungselements (130) und der Antriebs- und Positioniereinrichtung (150), um eine einheitliche Kassette (9) zu bilden, wobei die Kassette (9) auf einer Transporteinrichtung (10) vorgesehen ist.

2. Vorrichtung nach Anspruch 1, bei der das verlängerbare Leitungselement (130) ein flexibler Schlauch (313) ist.

3. Vorrichtung nach Anspruch 1, bei der das verlängerbare Leitungselement (130) ein Leitungselement ist, das an einem oder an beiden seiner Enden einen verlängerbaren Gleitmechanismus (200) aufweist und bei der die Antriebseinrichtung (150) den verlängerbaren Gleitmechanismus (200) antreibt.

4. Kassettenartige Leitungsverbindungsvorrichtung, die ein Leitungselement (15) enthält, das die Funktion des Verbindens a) eines stationären Tanks (1 bis 5) und einer stationären Verbindungsleitung (6 bis 8) oder b) einer stationären Verbindungsleitung (6 bis 8) und einer anderen stationären Verbindungsleitung (6 bis 8) hat und das eine an ihren beiden Enden vorgesehene Kopplungseinrichtung (16, 17) aufweist und das aus einer Gruppe ausgewählt ist, die aus Leitungselementen (38 bis 40) mit unterschiedlichen Längen besteht, um mit spezifizierten Räumen konform zu sein, die eine Antriebseinrichtung (18) zum Antreiben des Leitungselements (15) und einen Rahmen (29) zum Aufnehmen des Leitungselements (15) und der Antriebseinrichtung (18) aufweist, um eine einheitliche Kassette (9) zu bilden, wobei die Kassette (9) auf einer Transporteinrichtung (10) vorgesehen ist.

5. Vorrichtung nach einem der Ansprüche 1 bis 4, bei der die Kopplungseinrichtung (16, 17, 140) eine Verbindungseinrichtung an beiden Enden des Leitungselements (15, 130) enthält, um zwischen dem stationären Tank (1 bis 5) und der stationären Verbindungsleitung (6 bis 8) zu verbinden, wobei die Positioniereinrichtung (18, 150) das Leitungselement (15, 130) an einer vorgegebenen Position positioniert.

6. Vorrichtung nach Anspruch 1, bei der die Transporteinrichtung (10) ein automatisch geführtes Fahrzeug (AGV) ist.

7. Vorrichtung nach einem der Ansprüche 1 bis 6, bei der das Leitungselement (15, 130) eine Funktion des Verbindens einer stationären Verbindungsleitung (5 bis 8) und einer anderen Verbindungsleitung (5 bis 8) hat.

8. Vorrichtung nach einem der Ansprüche 1 bis 7, bei der eine Energieversorgungseinrichtung (28, 106) zum Zuführen von seitens der Kassette (9) verwendeter Antriebsenergie in dem Kassettenrahmen (29, 190) eingebaut ist.

9. Vorrichtung nach einem der Ansprüche 1 bis 7, bei der eine Energieversorgungseinrichtung zum Zuführen von seitens der Kassette (9) verwendeter Antriebsenergie seitens des stationären Tanks oder seitens der stationären Verbindungsleitung vorgesehen ist.

10. Vorrichtung nach einem der Ansprüche 1 bis 9, bei der ein Detektor (19, 20) zum Detektieren des Inhaltszustands in der Leitung (15, 130) an dem Leitungselement vorgesehen ist.

11. Vorrichtung nach Anspruch 10, bei der der Detektor ein Durchflußmesser (20) ist.

12. Vorrichtung nach Anspruch 10, bei der der Detektor ein elektrischer Leitfähigkeitsmesser (19) ist.

13. Vorrichtung nach einem der Ansprüche 1 bis 12, bei der eine Einrichtung zum Steuern des Systems (21, 220) in dem Kassettenrahmen (29, 190) vorgesehen ist.

14. Vorrichtung nach einem der Ansprüche 1 bis 13, bei der eine Einrichtung (71, 230) zur Informationsübertragung in dem Kassettenrahmen (29, 190) vorgesehen ist.

15. System, das die kassettenartige Leitungsverbindungsvorrichtung nach einem der Ansprüche 1 bis 14 verwendet, und das das Transportieren der Vorrichtung (9) zu einer vorgegebenen Position zwischen a) einem stationären Tank (1 bis 5) und einer stationären Verbindungsleitung (6 bis 8) oder b) einer stationären Verbindungsleitung (6 bis 8) und einer anderen stationären Verbindungsleitung (6 bis 8), und das Verbinden der Vorrichtung (9) zwischen a) dem stationären Tank (1 bis 5) und der stationären Verbindungsleitung (6 bis 8) oder b) der stationären Verbindungsleitung (6 bis 8) und einer anderen stationären Verbindungsleitung (6 bis 8) mittels einer Kopplungseinrichtung (16, 17, 140) umfaßt.

16. System zur portionsweisen Produktion, das die Verwendung eines Systems umfaßt, wie es in Anspruch 15 beansprucht ist.

## Revendications

1. Appareil formant cartouche de raccordement de tuyauteries comprenant un élément de tuyauterie (130), qui a une fonction de raccordement a) d'un réservoir fixe (1 à 5 ) et d'une canalisation fixe (6 à 8) ou b) d'une canalisation fixe ( 6 à 8) et d'une autre canalisation fixe (6 à 8) et comporte un moyen d'accouplement (140) sur ses deux extrémités, ledit élément de tuyauterie (130) étant extensible en ce qui concerne sa longueur et comportant un moyen d'entraînement et de positionnement (150) pot entraîner et positionner ledit élément de tuyauterie (130) à un endroit prescrit et un bâti (190) pour loger ledit élément de tuyauterie (130) et ledit moyen d'entraînement et de positionnement (150) de manière à former une cartouche monobloc (9), ladite cartouche (9) étant disposée sur un moyen de transport (10).

2. Appareil selon la revendication 1, dans lequel ledit élément de tuyauterie extensible (130) est un tuyau souple (313).

3. Appareil selon la revendication 1, dans lequel ledit élément de tuyauterie extensible (130) est un élément de tuyauterie comportant sur une seule ou sur ses deux extrémités un mécanisme coulissant extensible (200) et le moyen d'entraînement (150) entraîne le mécanisme coulissant extensible (200).

4. Appareil formant cartouche de raccordement de tuyauteries sous cartouche comprenant un élément de tuyauterie (15) qui a une fonction de raccordement a) d'un réservoir fixe (1 à 5) et d'une canalisation fixe (6 à 8) ou b) d'une canalisation fixe (6 à 8) et d'une autre canalisation fixe (6 à 8) et comporte un moyen d'accouplement (16, 17) sur ses deux extrémités et est sélectionné parmi un groupe consistant en des éléments de tuyauterie (38 à 40) ayant différentes longueurs pour se prêter à des espaces spécifiés, comportant un moyen d'entraînement (18) pour entraîner ledit élément de tuyauterie (15), un moyen d'entraînement (18) pour entraîner ledit élément de tuyauterie (15) et un bâti (29) pour loger ledit élément de tuyauterie (15) et ledit moyen d'entraînement (18) de manière à former une cartouche monobloc (9), ladite cartouche (9) étant disposée sur un moyen de transport (10).

5. Appareil selon l'une des revendications 1 à 4, dans lequel ledit moyen d'accouplement (16, 17, 140) comprend un moyen de raccordement aux deux extrémités de l'élément de tuyauterie (15, 130) pour effectuer un raccordement entre ledit réservoir fixe (1 à 5) et ladite canalisation fixe (6 à 8), le moyen de positionnement (18, 150) positionnant ledit élément de tuyauterie (15, 130) à un endroit prescrit.

6. Appareil selon la revendication 1, dans lequel ledit moyen de transport (10) est un véhicule guidé automatique (AGV).

7. Appareil selon l'une des revendications 1 à 6, dans lequel ledit élément de tuyauterie (15, 130) a une fonction de raccordement d'une canalisation fixe (5 à 8) à une autre canalisation (5 à 8).

8. Appareil selon l'une des revendications 1 à 7, dans lequel un moyen (28, 106) de fourniture d'énergies pour fournir des énergies d'entraînement destinées à être utilisées sur le côté de ladite cartouche (9) est intégré audit bâti (29, 190) de cartouche

9. Appareil selon l'une des revendications 1 à 7, dans lequel un moyen de fourniture d'énergies pour fournir des énergies d'entraînement destinées à être utilisées sur le côté de ladite cartouche (9) est présent sur le côté réservoir fixe ou sur le côté canalisation fixe.

10. Appareil selon l'une des revendications 1 à 9, dans lequel un détecteur (19, 20) servant à détecter l'état du contenu du tuyau (15, 130) est présent sur l'élément de tuyauterie.

11. Appareil selon la revendication 10, dans lequel ledit détecteur est un débitmètre (20).

12. Appareil selon la revendication 10, dans lequel ledit détecteur est un instrument (19) de mesure de conductivité électrique.

13. Appareil selon une des revendications 1 à 12, dans lequel une moyen pour commander le système (21, 220) est présent dans le bâti de cartouche (29, 190).

14. Appareil selon une des revendications 1 à 13, dans lequel un moyen (71, 230) de communication d'informations est présent dans le bâti de cartouche (29, 190).

15. Système utilisant l'appareil formant cartouche de raccordement de tuyauteries selon l'une des revendications 1 à 14, qui comprend le transport dudit appareil (9) jusqu'à un endroit prescrit entre a) un réservoir fixe (1 à 5) et une canalisation fixe (6 à 8) ou b) une canalisation fixe (6 à 8) et une autre canalisation fixe (6 à 8), et raccordant ledit appareil (9) entre a) ledit réservoir fixe (1 à 5) et ladite canalisation fixe (6 à 8) ou b) ladite canalisation fixe (6 à 8) et ladite autre canalisation fixe (6 à 8) par le moyen d'accouplement (16, 17, 140).

16. Système de production discontinue qui comprend l'utilisation d'un système selon la revendication 15.
